# EUROPÄISCHE PATENTSCHRIFT

(11) **EP 4 065 440 B1**
(45) Veröffentlichungstag und Bekanntmachung des Hinweises auf die Patenterteilung: **02.08.2023**
(21) Anmeldenummer: 20808096.0
(22) Anmeldetag: 17.11.2020
(51) Int. Cl.: B60T 13/38, B60T 13/68, B60T 8/17

(54) **VERFAHREN ZUM BETREIBEN EINES ELEKTROPNEUMATISCHEN FESTSTELLBREMSMODULS, ELEKTROPNEUMATISCHES FESTSTELLBREMSMODUL, ELEKTRONISCH STEUERBARES PNEUMATISCHES BREMSSYSTEM, FAHRZEUG**
METHOD OF OPERATING AN ELECTROPNEUMATIC PARKING BRAKE MODULE, ELECTROPNEUMATIC PARKING BRAKE MODULE, ELECTRONICALLY CONTROLLED PNEUMATIC BRAKE SYSTEM, VEHICLE
PROCÉDÉ DE FONCTIONNEMENT D'UN MODULE DE FREIN DE STATIONNEMENT ELECTROPNEUMATIQUE, MODULE DE FREIN DE STATIONNEMENT ELECTROPNEUMATIQUE, SYSTÈME DE FREINAGE PNEUMATIQUE À COMMANDE ELECTRONIQUE, VÉHICULE

(30) Priorität: 26.11.2019 DE 102019131930
(43) Veröffentlichungstag der Anmeldung: 05.10.2022
(73) Patentinhaber: ZF CV Systems Global GmbH, 3006 Bern (CH)
(72) Erfinder: VAN THIEL, Julian, 30938 Grossburgwedel (DE)
(74) Vertreter: Ohlendorf, Henrike
(86) Internationale Anmeldenummer: PCT/EP2020/082388
(87) Internationale Veröffentlichungsnummer: WO 2021/104939

(56) Entgegenhaltungen:
- EP-A1- 3 112 230
- WO-A1-2019/034296
- DE-A1-102007 016 335

## Beschreibung

In modernen elektronisch steuerbaren pneumatischen Bremssystemen, die insbesondere bei Nutzfahrzeugen eingesetzt werden, die für einen autonomen Fahrbetrieb vorgesehen sind, ist es wichtig, Maßnahmen bereitzustellen, die bei einem Fehler in dem Bremssystem dennoch ein sicheres Verzögern des Nutzfahrzeugs zulassen.

DE 10 2017 001 409 A1 beschreibt ein Verfahren zur Steuerung eines autonomen Fahrzeugs mit einem Fahrzeugsteuergerät zur Steuerung autonomer Fahrfunktionen des Fahrzeugs und mit einem Bremssteuergerät zur Steuerung von Bremsfunktionen eines insbesondere pneumatischen Bremssystems des Fahrzeugs mit wenigstens einer Bremseinrichtung, insbesondere einer Feststellbremse. Die Bremseinrichtung ist durch das Bremssteuergerät und/oder das Fahrzeugsteuergerät zum Bremsen aktivierbar und zum Fahren deaktivierbar, indem wenigstens ein Schaltelement angesteuert wird. Die in DE 10 2017 001 409 A1 gezeigte Lösung zeichnet sich dadurch aus, dass das Schaltelement, vorzugsweise ein Magnetventil, zwei elektrische Leiter zur Ansteuerung aufweist, wobei einer der beiden Leiter vom Bremssteuergerät und der andere der beiden Leiter vom Fahrzeugsteuergerät geschaltet wird.

Die in DE 10 2017 001 409 A1 gezeigte elektrische Verschaltung des Bremsventils mit sowohl dem Bremssteuergerät als auch dem Fahrzeugsteuergerät ermöglicht eine Ausfallsicherung. Es wird nämlich bei Ausfall oder Fehlfunktion bereits eines der beiden Steuergeräte die Bremseinrichtung über das Bremsventil aktiviert, da dann der Elektromagnet abgeschaltet wird. Dabei schaltet jedes der Steuergeräte nur der beiden Leiter der Zuleitung des Elektromagneten.

DE 10 2015 008 377 A1 zeigt ein Feststellbremsmodul einer Feststellbremseinrichtung, mit einer elektronischen Steuereinrichtung, mindestens einem von der Steuereinrichtung betätigbaren Magnetventil und einem druckmittelmengenverstärkenden Ventil zur Druckmittelbeaufschlagung mindestens eines Bremsaktuators. Ferner weist das Feststellbremsmodul einen Notlöse-Druckmittelanschluss und ein Doppelrückschlagventil auf, mit denen eine Notlösefunktion der Feststellbremseinrichtung bereitstellbar ist, wozu der Notlöse-Druckmittelanschluss mittels einer ersten Druckmittelleitung über ein Rückschlagventil mit dem Versorgungseingang des druckmittelmengenverstärkenden Ventils und mittels einer zweiten Druckmittelleitung mit einem Eingang des Doppelrückschlagventils verbunden ist.

EP 3 112 230 A1 zeigt ein Feststellbremsmodul einer Feststellbremseinrichtung, mit einer elektronischen Steuereinrichtung, mindestens einem von der Steuereinrichtung betätigbaren Magnetventil und einem druckmittelmengenverstärkenden Ventil zur Druckmittelbeaufschlagung mindestens eines Bremsaktuators. Ferner weist das Feststellbremsmodul einen Notlöse-Druckmittelanschluss und ein Doppelrückschlagventil auf, mit denen eine Notlösefunktion der Feststellbremseinrichtung bereitstellbar ist. Dazu ist der Notlöse-Druckmittelanschluss mittels einer ersten Druckmittelleitung über ein Rückschlagventil mit dem Versorgungseingang des druckmittelmengenverstärkenden Ventils verbunden und mittels einer zweiten Druckmittelleitung mit einem Eingang des Doppelrückschlagventils.

Die vorgestellten Konzepte sind - trotz der generell vorteilhaften, vorliegend elektrisch realisierten Ausfallsicherung - noch verbesserungswürdig. Dies betrifft insbesondere einen einfachen Aufbau des Systems, das heißt den apparativen Aufwand für ein elektronisch steuerbares pneumatisches Bremssystem möglichst gering zu halten, um Bauraum und Gewicht zu sparen und die Komplexität des Bremssystems gering zu halten.

Wünschenswert wäre es daher, ein Verfahren zum Betreiben eines elektronisch steuerbaren pneumatischen Bremssystems bereitzustellen, bei dem die Nachteile des Standes der Technik zumindest teilweise behoben sind.

An dieser Stelle setzt die Erfindung an, deren Aufgabe es ist, ein Verfahren zum Betreiben eines elektronisch steuerbaren pneumatischen Bremssystems bereitzustellen, bei dem die Nachteile des Standes der Technik zumindest teilweise behoben sind.

Die Aufgabe, betreffend das elektropneumatische Feststellbremsmodul, wird durch die Erfindung mit einem Verfahren zum Betreiben eines elektronisch steuerbaren pneumatischen Bremssystems des Anspruchs 1 gelöst. Die Erfindung geht aus von einem Verfahren zum Betreiben eines elektropneumatischen Feststellbremsmoduls für ein elektronisch steuerbares pneumatisches Bremssystem für ein Fahrzeug, insbesondere Nutzfahrzeug, mit einem Vorratsanschluss zum Empfangen eines Vorratsdrucks, wenigstens einem Feststellbremsanschluss zum Anschließen wenigstens eines Feststellbremszylinders, einer den Vorratsdruck empfangenden Hauptventileinheit, die dazu ausgebildet ist, in Abhängigkeit von einem Steuerdruck einen Federspeicherdruck an dem Feststellbremsanschluss auszusteuern, und einer den Vorratsdruck empfangenden Vorsteuerventilanordnung zum Bereitstellen des Steuerdrucks, wobei die Vorsteuerventilanordnung ein Bistabilventil aufweist, das zwischen einer ersten Belüftungsstellung und einer zweiten Entlüftungsstellung umschaltbar ist, und einer Steuereinheit zum Bereitstellen von ersten und zweiten Schaltsignalen an der Vorsteuerventilanordnung, wobei die Vorsteuerventilanordnung ein mit dem Bistabilventil pneumatisch in Reihe geschaltetes und in einer Steuerleitung der Hauptventileinheit angeordnetes, monostabiles Halteventil aufweist, wobei das Halteventil stromlos in einer Öffnungsstellung geöffnet ist, und die Steuereinheit ausgebildet ist, das Halteventil zum Halten des Steuerdrucks mittels des ersten Schaltsignals in der Haltestellung zu halten, und in der Steuerleitung ein Zusatz-Einsteuerport angeordnet ist zum Empfangen eines an einem Zusatz-Bremsdruckanschluss bereitgestellten Zusatzsteuerdrucks, aufweisend den Schritt: Befüllen des Feststellbremszylinders durch Beaufschlagen des Steueranschlusses der Hauptventilanordnung zum Aussteuern des Federspeicherdrucks an dem Feststellbremsanschluss in Abhängigkeit des Steuerdrucks, wobei das Beaufschlagen des Steueranschlusses mittels eines Zusatzsteuerdrucks erfolgt, der an dem Zusatz-Bremsdruckanschluss bereitgestellt wird und über den Zusatz-Einsteuerport angenommen wird.

Erfindungsgemäß ist bei dem Verfahren vorgesehen, dass das Halteventil bei einem Fehler in einer elektronischen Komponente, insbesondere in einer Steuereinheit des Bremssystems, und/oder bei einem Stromausfall selbsttätig in eine Öffnungsstellung zum Entlüften des Steueranschlusses schaltet, wobei der Steueranschluss der Hauptventilanordnung zum Entlüften des Feststellbremsanschlusses entlüftet wird.

Die Erfindung geht von der Überlegung aus, dass es vorteilhaft ist, ein Bremssystem unter geringem Aufwand so zu erweitern, dass ein sicherer Betrieb auch in einem autonomen Betriebsmodus möglich ist. Ein sicherer Betrieb beinhaltet dabei eine Ausfallsicherung, mittels welcher das Fahrzeug einem Fehlerfall in der Bremse oder einem schweren Fehler im Gesamtsystem oder einem Stromausfall dennoch verzögert und in einen sicheren Zustand überführt werden kann.

Die Erfindung schließt dabei die Erkenntnis mit ein, dass es vorteilhaft ist, den apparativen Aufwand einer derartigen Ausfallsicherung möglichst gering zu halten, um Gewicht und Bauraum zu sparen und die Komplexität des Bremssystems nur so wenig wie nötig zu erhöhen. Insbesondere soll eine Ausfallsicherung unter weitgehender Beibehaltung der aktuellen Betriebsbrems- und Fahrzeug-Bordnetzarchitektur erreicht werden.

Dadurch, dass die Vorsteuerventilanordnung ein Halteventil aufweist, kann der Steuerdruck am Steueranschluss der Hauptventileinheit gehalten werden, wenn das Halteventil zum Halten des Steuerdrucks durch die Steuereinheit mittels des ersten Schaltsignals in der Haltestellung gehalten wird.

Dadurch, dass in der Steuerleitung ein Zusatz-Einsteuerport zum Empfangen eines an einem Zusatz-Bremsdruckanschluss bereitgestellten Zusatzsteuerdrucks angeordnet ist, kann der Steueranschluss - unabhängig von einem manuellen Betriebsmodus, in dem ein Beaufschlagen der Hauptventileinheit über den Vorratsanschluss und die Vorsteuerventilanordnung erfolgt - in einem weiteren, insbesondere automatischen Betriebsmodus betrieben werden. In einem derartigen weiteren, insbesondere automatischen Betriebsmodus wird der Steueranschluss über einen Zusatz-Bremsdruckanschluss belüftet, und insbesondere über das Halteventil der Vorsteuerventilanordnung entlüftet. In beiden Betriebsmodi, dem manuellen und dem automatischen, kann dabei der Bremsdruck über einen Vorratsanschluss bereitgestellt werden; jedoch ändert sich die Ansteuerung der Hauptventileinheit über den Steueranschluss. Als Einsteuerport wird im Rahmen der Anmeldung ein pneumatischer Anschluss oder dergleichen pneumatische Verbindungsmöglichkeit bezeichnet.

Durch das Halteventil ist es möglich, den Steueranschluss der Hauptventileinheit unter Druck zu halten, auch wenn das Bistabilventil in einer Entlüftungsstellung ist. Durch das Halteventil wird somit eine Ausfallsicherung erreicht, da sie in einem Fehlerfall oder Stromausfall nicht angesteuert wird und dadurch selbsttätig, insbesondere durch die Federkraft einer Halteventil-Rückstellfeder, zum Entlüften des Steueranschlusses und somit zur bremsenden Betätigung der Feststellbremszylinder in seine Öffnungsstellung schaltet.

Somit kann mit dem erfindungsgemäßen Verfahren ein unabhängiges Ansteuern zum Lösen eines oder mehrerer Feststellbremszylinder erreicht werden, indem der Zusatz-Bremsdruckanschluss zur Bereitstellung des Zusatzsteuerdrucks pneumatisch mit einer Druckquelle, beispielsweise einem Achsmodulator, insbesondere einem Vorder- oder Hinterachsmodulator, verbunden ist, und gleichzeitig über das stromlos öffnende Halteventil eine Ausfallsicherung bereitgestellt werden.

Dadurch, dass ein Halten des Steuerdrucks am Steueranschluss der Hauptventileinheit unabhängig vom Bistabilventil möglich ist, ermöglicht ein erfindungsgemäßes Verfahren auch eine Ausfallsicherung in dem Zeitraum, in dem die Feststellbremse gelöst wird. In einem Feststellbremsmodul gemäß dem Stand der Technik, in dem ein Lösen der Feststellbremse über ein Schalten des Bistabilventils erfolgt, wäre diese Ausfallsicherung nämlich nicht gegeben, da bei einem Fehlerfall oder Stromausfall in dem Zeitraum, in dem das Bistabilventil - zum Lösen der Feststellbremse - in einer Belüftungsstellung ist, eine Entlüftung zwecks Notbremsung nicht möglich wäre - und eine Entlüftungsstellung aufgrund des bistabilen, stromlos in seiner Schaltstellung verharrenden Charakters des Bistabilventils auch nicht selbsttätig erreichbar wäre. Durch das erfindungsgemäße elektropneumatische Feststellbremsmodul mit Halteventil wird auch während des Lösens eine Ausfallsicherung, das heißt die Möglichkeit einer Ausfallbremsung im Fehlerfall und/oder Stromausfall, gewährleistet, da das Ansteuern der Hauptventileinheit unabhängig vom Bistabilventil erfolgen kann.

Durch ein selbsttätiges Entlüften wird vorteilhaft eine Ausfallsicherung erreicht, falls ein Fehlerfall und/oder Stromausfall im Bremssystem, insbesondere in einer Zentralsteuereinheit oder Steuereinheit des Bremssystems und/oder des elektropneumatischen Feststellbremsmoduls vorliegt. Dadurch, dass das Halteventil insbesondere stromlos geöffnet ausgebildet ist, wird bei einem Ausfall der Ansteuerung des Halteventils in einem derartigen Fehlerfall und/oder Stromausfall der Steueranschluss der Hauptventileinheit entlüftet, wodurch auch der Feststellbremsanschluss und damit die Feststellbremszylinder entlüftet werden, wodurch das Fahrzeug in den Stillstand geführt wird.

Mit einem Betriebsbremssystem ist im Rahmen der Erfindung ein in der Regel über einen Bremswertgeber betätigbares Bremssystem gemeint, das im Betrieb des Fahrzeugs zur Bremsung eingesetzt werden kann, indem Betriebsbremszylinder über einen oder mehrere Achsmodulatoren durch Beaufschlagung mit Druckluft aktuiert werden. Im Unterschied dazu dient eine Feststellbremse in der Regel einem Feststellen des Fahrzeugs im Ruhezustand mittels eines oder mehrerer Feststellbremszylinder, welche insbesondere als Federspeicher-Bremszylinder ausgebildet sind, und durch Beaufschlagung mit Druckluft zum Bewegen des Fahrzeugs gelöst werden können. In einem automatischen Betriebsmodus, bei dem insbesondere relativ niedrige Geschwindigkeiten unterhalb von 10 km/h zu erwarten sind, wird bei einem erfindungsgemäßen elektropneumatischen Feststellbremsmodul die Feststellbremse zur Ausfallsicherung, das heißt zum Gewährleisten einer Ausfallbremsung in einem Fehlerfall und/oder Stromausfall, genutzt.

Die Steuereinheit kann ein in das elektropneumatische Feststellbremsmodul integriertes Steuermodul sein, oder ein in einem Zentralmodul der Fahrzeugsteuerung oder der Bremssteuerung integriertes Hardware- oder Softwaremodul, das dem elektropneumatischen Feststellbremsmodul zugeordnet ist. Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer Weiterbildung des Verfahrens ist vorgesehen, dass zum Beaufschlagen des Steueranschlusses mit dem Zusatzsteuerdruck das Halteventil in die Öffnungsstellung geschaltet wird und/oder in der Öffnungsstellung gehalten wird. Eine derartige Weiterbildung des Verfahrens ist insbesondere vorteilhaft, wenn der Zusatz-Einsteuerport in der Steuerleitung zwischen dem Bistabilventil und dem Halteventil angeordnet oder als ein Bistabilventilanschluss des Bistabilventils gebildet ist, weil in diesen Fällen der Zusatzsteuerdruck vom Zusatz-Bremsdruckanschluss an den Steueranschluss der Hauptventilanordnung geleitet werden kann.

Bei dem erfindungsgemäßen Verfahren ist vorgesehen, dass zum Halten des Zusatzsteuerdrucks am Steueranschluss das Halteventil in der Haltestellung gehalten wird. Das Halteventil wird insbesondere im Anschluss an ein Beaufschlagen des Steueranschluss mit einem Zusatzsteuerdruck in der Haltestellung gehalten. Insbesondere wird, wenn der Zusatzsteuerdruck noch vom Zusatz-Bremsdruckanschluss bereitgestellt wird, das Halteventil in die Haltestellung geschaltet, und insbesondere danach erst das Bereitstellen des Zusatzsteuerdruck am Zusatz-Bremsdruckanschluss beendet. Auf diese Weise wird der Zusatzsteuerdruck durch das Halteventil am Steueranschluss der Hauptventilanordnung gehalten bzw. eingefangen. In einer derartigen Weiterbildung des Verfahrens kann vorteilhaft die Feststellbremse gelöst gehalten werden, und zwar unabhängig vom Bistabilventil.

In einer Weiterbildung des Verfahrens ist vorgesehen, dass zum Beaufschlagen des Steueranschlusses mit dem Zusatzsteuerdruck das Bistabilventil in die Entlüftungsstellung geschaltet wird und/oder in der Entlüftungsstellung verbleibt. Eine derartige Weiterbildung des Verfahrens ist insbesondere vorteilhaft, wenn der Zusatz-Einsteuerport als ein Bistabilventilanschluss, insbesondere als der dritte Bistabilventilanschluss, des Bistabilventils gebildet ist, weil in diesen Fällen der Zusatzsteuerdruck vom Zusatz-Bremsdruckanschluss an den der Steueranschluss der Hauptventilanordnung geleitet werden kann. Insbesondere bleibt das Bistabilventil ständig in seiner Entlüftungsstellung. Ein ständiges Verbleiben des Bistabilventil in seiner Entlüftungsstellung ermöglicht vorteilhaft, dass die Feststellbremse unabhängig von dem Bistabilventil bedient werden kann, insbesondere dass das Halteventil den Steueranschluss der Hauptventilanordnung unabhängig von dem Bistabilventil entlüften kann, um die Feststellbremse zum Auslösen einer Ausfallbremsung einfallen zu lassen.

In einer Weiterbildung des Verfahrens ist vorgesehen, dass vor dem Beaufschlagen des Steueranschlusses mit dem Zusatzsteuerdruck das Halteventil in seine Haltestellung geschaltet wird. Eine derartige Weiterbildung ist insbesondere vorteilhaft, wenn der Zusatz-Einsteuerport in der Steuerleitung zwischen dem Halteventil und dem Steueranschluss der Hauptventilanordnung angeordnet ist.

In einer Weiterbildung des Verfahrens ist vorgesehen, dass der Zusatz-Einsteuerport als ein erster Auswahlventilanschluss einer Auswahlventileinheit zum Empfangen des Zusatzsteuerdrucks gebildet ist. In einer Weiterbildung des Verfahrens ist vorgesehen, dass die Auswahlventileinheit zwischen dem Halteventil und einem Steueranschluss der Hauptventileinheit angeordnet ist. In einer Weiterbildung des Verfahrens ist vorgesehen, dass die Auswahlventileinheit zwischen dem Bistabilventil und dem Halteventil angeordnet ist. In einer Weiterbildung des Verfahrens ist vorgesehen, dass der Zusatz-Einsteuerport durch einen Bistabilventilanschluss des Bistabilventils, insbesondere einen dritten Bistabilventilanschluss, gebildet ist, der in der Entlüftungsstellung pneumatisch mit dem Halteventil verbunden ist und insbesondere in der Belüftungsstellung gesperrt ist.

In einer Weiterbildung des Verfahrens ist vorgesehen, dass das Entlüften des Steueranschlusses weiter über das Bistabilventil erfolgt, wobei sich das Bistabilventil in einem automatischen Betrieb ständig in der Entlüftungsstellung befindet. Dadurch, dass sich das Bistabilventil in einem automatischen Betrieb ständig in der Entlüftungsstellung befindet, wird vorteilhaft zu jedem Zeitpunkt des automatischen Betriebs die Verfügbarkeit der Ausfallsicherung gewährleistet, weil eine Entlüftung des Steueranschlusses der Hauptventileinheit, welche eine Bremsung zur Folge hätte, nur vom Halteventil abhängt.

In einer Weiterbildung des Verfahrens ist vorgesehen, dass der Zusatzsteuerdruck von einer zusätzlichen Bremskomponente und/oder von einem Achsmodulator, insbesondere von einem Vorderachsmodulator, von einem Hinterachsmodulator oder von einem Anhänger-Steuerventil, bereitgestellt wird. In einer derartigen Weiterbildung des Verfahrens kann der Zusatzsteuerdruck vorteilhaft von einer bereits vorhandenen Druckluftquelle des Bremssystems, insbesondere einem Achsmodulator des Betriebsbremssystems, bereitgestellt werden.

In einer Weiterbildung des Verfahrens ist vorgesehen, dass der Zusatzsteuerdruck durch einen Vorderachsbremsdruck oder einen Hinterachsbremsdruck oder einen Anhängerbremsdruck gebildet ist oder aus einem dieser Bremsdrücke abgeleitet ist. In einer derartigen Weiterbildung kann der jeweilige Bremsdruck, der insbesondere von einem Achsmodulator des Betriebsbremssystems bereitgestellt wird, zum Ansteuern der Hauptventileinheit genutzt werden, um die Feststellbremszylinder des Bremssystems zu lösen.

In einer Weiterbildung des Verfahrens ist vorgesehen, dass das Beaufschlagen des Steueranschlusses mittels des Zusatzsteuerdrucks beim Erreichen eines Soll-Federspeicherdrucks für den am Feststellbremsanschluss bereitgestellten Federspeicherdruck beendet wird. In einer derartigen Weiterbildung des Verfahrens wird der von der Hauptventileinheit ausgesteuerte Federspeicherdruck, insbesondere mit einem Drucksensor, gemessen. Mit der Kenntnis über den ausgesteuerten Federspeicherdruck kann die Hauptventileinheit beim Erreichen des Soll-Federspeicherdrucks geschlossen werden. Auf diese Weise kann im Sinne eines Regelkreises stets ein geeigneter Federspeicherdruck am Feststellbremsanschluss bereitgestellt werden.

In einer Weiterbildung des Verfahrens ist vorgesehen, dass das Beaufschlagen des Steueranschlusses mittels des Zusatzsteuerdrucks während eines Beaufschlagungszeitraums erfolgt, wobei der Beaufschlagungszeitraum eine Dauer zwischen 0.5 und 1 Sekunde hat. Ein derartiger Zeitraum gibt in der Regel genügend Zeit, um einen ausreichenden Steuerdruck am Steueranschluss der Hauptventileinheit aufzubauen.

In einer Weiterbildung des Verfahrens ist vorgesehen, dass ein erneutes Beaufschlagen des Steueranschlusses mittels des Zusatzsteuerdrucks erfolgt, wenn der Federspeicherdruck auf einen Wert unterhalb des Soll-Federspeicherdrucks abgefallen ist. Ein Abfallen des Federspeicherdrucks auf einen Wert unterhalb des Soll-Federspeicherdrucks kann beispielsweise auftreten, wenn der am Steueranschluss der Hauptventileinheit anliegende Druck auf einen Wert unterhalb eines Sollwerts für den Zusatzsteuerdruck abfällt. Ein Druckabfall am Steueranschluss kann beispielsweise aufgrund von Undichtigkeiten in der Steuerleitung zwischen dem Halteventil und dem Steueranschluss der Hauptventileinheit, insbesondere am Auswahlventil, auftreten. Als Konsequenz eines Druckabfalls am Steueranschluss fällt entsprechend der ausgesteuerte Federspeicherdruck auf einen Wert unterhalb des Soll-Federspeicherdrucks. Durch ein erneutes Beaufschlagen des Steueranschlusses kann somit das Vorhandensein derartiger Undichtigkeiten kompensiert werden. Insbesondere kann durch einen mit dem dritten Hauptventilanschluss pneumatisch verbundenen Drucksensor ein Abfallen des ausgesteuerten Federspeicherdrucks detektiert werden. Der Soll-Federspeicherdruck beträgt vorzugsweise zwischen 4 und 8 bar, ganz bevorzugt 6 bar.

In einer Weiterbildung des Verfahrens ist vorgesehen, dass zum Beaufschlagen des Steueranschlusses mit dem Zusatzsteuerdruck das Halteventil in die Öffnungsstellung geschaltet wird, und insbesondere nach dem Beaufschlagen oder kurz vor dem Ende des Beaufschlagens das Halteventil wieder in die Haltestellung geschaltet wird.

Insbesondere ist bei dem Verfahren vorgesehen, dass zum Halten des Zusatzsteuerdrucks am Steueranschluss, insbesondere im Anschluss an ein Beaufschlagen des Zusatzsteuerdrucks, das Halteventil in der Haltestellung gehalten wird.

In einem zweiten Aspekt gibt die Erfindung zur Lösung der Aufgabe weiterhin ein elektropneumatisches Feststellbremsmodul an für ein elektronisch steuerbares pneumatisches Bremssystem für ein Fahrzeug, insbesondere Nutzfahrzeug, mit einem Vorratsanschluss zum Empfangen eines Vorratsdrucks, wenigstens einem Feststellbremsanschluss zum Anschließen wenigstens eines Feststellbremszylinders, einer den Vorratsdruck empfangenden Hauptventileinheit, die dazu ausgebildet ist, in Abhängigkeit von einem Steuerdruck einen Federspeicherdruck an dem Feststellbremsanschluss auszusteuern, und einer den Vorratsdruck empfangenden Vorsteuerventilanordnung zum Bereitstellen des Steuerdrucks, wobei die Vorsteuerventilanordnung ein Bistabilventil aufweist, das zwischen einer ersten Belüftungsstellung und einer zweiten Entlüftungsstellung umschaltbar ist, und einer Steuereinheit zum Bereitstellen von ersten und zweiten Schaltsignalen an der Vorsteuerventilanordnung, wobei die Vorsteuerventilanordnung ein mit dem Bistabilventil pneumatisch in Reihe geschaltetes und in einer Steuerleitung der Hauptventileinheit angeordnetes, monostabiles Halteventil aufweist, wobei das Halteventil stromlos in einer Öffnungsstellung geöffnet ist, und die Steuereinheit ausgebildet ist, das Halteventil zum Halten des Steuerdrucks mittels des ersten Schaltsignals in der Haltestellung zu halten, und in der Steuerleitung ein Zusatz-Einsteuerportangeordnet ist zum Empfangen eines an einem Zusatz-Bremsdruckanschluss bereitgestellten Zusatzsteuerdrucks.

Bei dem elektropneumatischen Feststellbremsmodul gemäß dem zweiten Aspekt ist vorgesehen, dass das Halteventil bei einem Fehler in einer elektronischen Komponente, insbesondere in einer Steuereinheit des Bremssystems, und/oder bei einem Stromausfall selbsttätig in eine Öffnungsstellung zum Entlüften des Steueranschlusses schaltet, wobei der Steueranschluss der Hauptventilanordnung zum Entlüften des Feststellbremsanschlusses entlüftet wird.

Bei dem elektropneumatischen Feststellbremsmodul gemäß dem zweiten Aspekt der Erfindung werden die Vorteile des Verfahrens gemäß dem ersten Aspekt der Erfindung entsprechend genutzt.

Das elektropneumatische Feststellbremsmodul kann dadurch weitergebildet werden, dass der Zusatz-Einsteuerport als ein erster Auswahlventilanschluss einer Auswahlventileinheit zum Empfangen des Zusatzsteuerdrucks gebildet ist, wobei die Auswahlventileinheit am ersten Auswahlventilanschluss eine Rücksperrcharakteristik aufweist derart, dass der erste Auswahlventilanschluss in einer Strömungsrichtung vom Zusatz-Bremsdruckanschluss über einen dritten Auswahlventilanschluss zum Steueranschluss öffnet und entgegen der Strömungsrichtung sperrt. Durch die Rücksperrcharakteristik des Auswahlventils wird vorteilhaft erreicht, dass der Zusatzsteuerdruck auch nach einem Abfallen des Drucks am Zusatz-Bremsdruckanschluss weiter am Steueranschluss gehalten wird. Dadurch wird die Hauptventileinheit derart aktuiert, dass ein Federspeicherdruck zum Lösen der Feststellbremszylinder am Feststellbremsanschluss bereitgestellt wird. Ein Auswahlventil ermöglicht vorteilhaft insbesondere, dass derjenige Anschluss von einem ersten und zweiten Auswahlventilanschluss öffnet, an dem der höhere Druck anliegt, und diesen geöffneten Auswahlventilanschluss mit einem dritten Auswahlventilanschluss verbindet.

Ein Zusatz-Einsteuerport, insbesondere eine Auswahlventileinheit, kann im Rahmen der Erfindung im einfachsten Fall durch einen zusätzlichen pneumatischen Anschluss für den Zusatz-Bremsdruckanschluss an die Steuerleitung gebildet sein, der insbesondere eine Rücksperrcharakteristik aufweist.

Vorteilhaft ist vorgesehen, dass die Auswahlventileinheit zwischen dem Halteventil und einem Steueranschluss der Hauptventileinheit angeordnet ist. In einer derartigen Weiterbildung kann vorteilhaft ein Zusatzsteuerdruck eingesteuert werden, ohne dass das Halteventil geöffnet sein muss.

Insbesondere ist vorgesehen, dass die Auswahlventileinheit zwischen dem Bistabilventil und dem Halteventil angeordnet ist. In einer derartigen Weiterbildung ist vorteilhaft ein Halten des als Zusatzsteuerdruck an den Steueranschluss der Hauptventileinheit geleiteten Druckes durch das Halteventil möglich, insbesondere ohne dass eine Rücksperrcharakteristik des Zusatz-Einsteuerports benötigt wird.

Das elektropneumatische Feststellbremsmodul kann dadurch weitergebildet werden, dass der Zusatz-Einsteuerport durch einen Bistabilventilanschluss des Bistabilventils, insbesondere einen dritten Bistabilventilanschluss, gebildet ist, der in der Entlüftungsstellung pneumatisch mit dem Halteventil verbunden ist und insbesondere in der Belüftungsstellung gesperrt ist. In einer derartigen Weiterbildung kann vorteilhaft das vorhandene Bistabilventil genutzt werden, um den Zusatzsteuerdruck in die Steuerleitung zu leiten, und auf ein zusätzliches Ventil verzichtet werden.

Vorteilhaft ist ein Anhängerventil vorgesehen, das bevorzugt als 3/2-Wegeventil, besonders bevorzugt als 3/2-Wege-Magnetventil ausgebildet ist. Das Anhängerventil ist insbesondere ausgebildet, in einer ersten, Vorratsstellung den Vorratsanschluss pneumatisch mit einem Anhängeranschluss zu verbinden und in einer zweiten, Steuerstellung den dritten Hauptventilanschluss pneumatisch mit dem Anhängeranschluss zu verbinden. Mittels eines Anhängerventils kann vorteilhaft ein von dem Fahrzeug verbundener Anhänger mit Druckluft versorgt werden, und zwar insbesondere wahlweise mit einem Vorratsdruck oder mit einem Federspeicherdruck. Mittels eines Anhängerventils kann insbesondere eine Feststellbremse des Anhängers mit einem Federspeicherdruck versorgt werden.

Das elektropneumatische Feststellbremsmodul kann dadurch weitergebildet werden, dass das Halteventil zwischen dem Bistabilventil und dem Steueranschluss der Hauptventileinheit angeordnet ist. Eine derartige Anordnung des Halteventils hat sich als vorteilhaft erwiesen, insbesondere weil aufgrund der Nähe zum Steueranschluss das Volumen des zu haltenden Steuerdrucks vorteilhaft gering gehalten wird.

Vorteilhaft ist vorgesehen, dass das Halteventil als 2/2-Wege-Magnetventil ausgebildet ist. In einer derartigen Weiterbildung stellt sich das Halteventil selbsttätig in seine Öffnungsstellung, wenn der Magnetanker des Magnetventils nicht bestromt wird.

Vorteilhaft ist vorgesehen, dass das Bistabilventil als ein 3/2-Wege-Bistabilmagnetventil ausgebildet ist.

Das elektropneumatische Feststellbremsmodul kann dadurch weitergebildet werden, dass die Hauptventileinheit eine Drossel aufweist, ausgebildet zum Herstellen einer pneumatischen Verbindung zwischen einem mit dem Feststellbremsanschluss verbundenen, dritten Hauptventilanschluss und dem Steueranschluss der Hauptventileinheit.

Die durch die Drossel und ggf. durch eine Hauptventil-Bypassleitung hergestellte pneumatische Verbindung ist derart, dass bei einem leckagebedingten Abfallen des Steuerdrucks am Steueranschluss der Steuerdruck auf einen Wert des am dritten Hauptventilanschluss ausgesteuerten Federspeicherdrucks angeglichen wird. Bedingt durch den geringeren Leitungsquerschnitt der Drossel geschieht ein derartiges Angleichen langsam im Vergleich zu einer - durch eine Schaltung des Halteventils oder Bistabilventils hervorgerufenen - Druckluftströmung. Durch eine derartige Drossel können vorteilhaft Undichtigkeiten, insbesondere in der Steuerleitung, die zum Abfallen des Steuerdrucks am Steueranschluss führen, kompensiert werden.

Insbesondere ist vorgesehen, dass die Auswahlventileinheit ein Wechselventil aufweist, welches ausgebildet ist, den ersten oder einen zweiten Auswahlventilanschluss mit dem dritten Auswahlventilanschluss zu verbinden, wobei von dem ersten und zweiten Auswahlventilanschluss derjenige geöffnet wird, an dem der höhere Druck anliegt. In einer derartigen Weiterbildung wird die Rücksperrcharakteristik über einen innerhalb des Wechselventils beweglichen Ventilkörper realisiert, welcher dichtend gegen sowohl den ersten Auswahlventilanschluss, als auch den zweiten Auswahlventilanschluss gedrückt werden kann. Auf diese Weise wird stets derjenige vom ersten oder zweiten Auswahlventilanschluss, an dem der höhere Druck anliegt, mit dem dritten Auswahlventilanschluss pneumatisch verbunden, und der jeweils andere der beiden gesperrt. Mit einem derartigen Wechselventil wird vorteilhaft erreicht, dass sich ein am ersten Auswahlventilanschluss anliegender Druck und zusätzlich ein am zweiten Auswahlventilanschluss anliegender Druck nicht addieren, da stets der Anschluss, an dem der niedrigere Druck anliegt, durch den Ventilkörper gesperrt wird. Somit kann die Gefahr eines zu hohen und möglicherweise schädlichen Drucks am Steueranschluss verringert werden.

Das elektropneumatische Feststellbremsmodul kann dadurch weitergebildet werden, dass das Wechselventil eine Vorspannfeder aufweist zum federbelasteten Festlegen einer Ventilstellung, insbesondere zum federbelasteten Festlegen der ersten Ventilstellung. In der ersten Ventilstellung wird der zum Zusatz-Bremsdruckanschluss führende, erste Auswahlventilanschluss gesperrt und insbesondere die Vorsteuerventilanordnung mit dem Steueranschluss (oder das Bistabilventil mit dem Halteventil) verbunden. Durch eine derartige Vorspannfeder kann der Ventilkörper des Wechselventils durch Auswahl einer geeigneten Federkonstante mit einer definierten Rückstellkraft dichtend gegen einen Auswahlventilanschluss, insbesondere den ersten Auswahlventilanschluss, gedrückt werden. Somit muss die am Zusatz-Bremsdruckanschluss bereitgestellte Druckluft zunächst diese Rückstellkraft überwinden, bevor sich der erste Auswahlventilanschluss öffnet. Auf diese Weise kann vorteilhaft verhindert werden, dass sich der erste Auswahlventilanschluss bereits bei geringer Druckluftbeaufschlagung am Zusatz-Bremsdruckanschluss öffnet. Durch die Vorspannfeder wird der Ventilkörper in seiner als Ruhestellung festgelegten Ventilstellung stabil durch die Vorspannfeder gehalten.

Das elektropneumatische Feststellbremsmodul kann dadurch weitergebildet werden, dass der Zusatz-Einsteuerport und/oder die Auswahlventileinheit am ersten Auswahlventilanschluss ein entgegen der Strömungsrichtung sperrendes Rückschlagventil aufweist. In einer derartigen Weiterbildung kann durch einen abdichtend aufsetzenden Ventilkörper eine Luftströmung entgegen der Strömungsrichtung verhindert werden. Hierdurch wird vorteilhaft erreicht, dass eine mit einem Zusatzsteuerdruck am Zusatz-Bremsdruckanschluss bereitgestellte Druckluftmenge zum Steueranschluss der Hauptventileinheit strömen kann, bei einem Abfallen des Druckes am Zusatz-Bremsdruckanschluss die Druckluft jedoch nicht über diesen entweichen kann. Auf diese Weise wird eine Rücksperrcharakteristik des Auswahlventils realisiert und es kann bei geschlossenem Halteventil der Steuerdruck am Steueranschluss gehalten werden. Insbesondere kann das Rückschlagventil eine Rückschlagventil-Vorspannfeder aufweisen.

Das elektropneumatische Feststellbremsmodul kann dadurch weitergebildet werden, dass die Auswahlventileinheit eine Bypassleitung aufweist, wobei die Bypassleitung den zweiten und dritten Auswahlventilanschluss pneumatisch verbindet und eine Drossel und/oder ein Bypass-Rückschlagventil aufweist. Mittels einer Bypassleitung kann durch einen Druckausgleich zwischen dem zweiten und dritten Auswahlventilanschluss eine Rückstellkraft erzeugt werden, welche einen Ventilkörper zur Erzeugung der Rücksperrcharakteristik dichtend gegen den ersten Auswahlventilanschluss drückt. Indem durch die Bypassleitung eine gezielte Leckage erzeugt wird, kann beim Belüften des ersten Auswahlventilanschlusses - bei dem der Ventilkörper gegen den zweiten Auswahlventilanschluss gedrückt wird - sich trotz dieser Position des Ventilkörpers, der am ersten Auswahlventilanschluss anliegende Zusatz-Steuerdruck auch am zweiten Auswahlventilanschluss einstellen, nämlich über die Bypassleitung. Hierdurch wird, nach Abfallen des Drucks am ersten Auswahlventilanschluss, durch ein Druckgefälle zwischen dem ersten und zweiten Auswahlventilanschluss, eine Rückstellkraft erzeugt, welche den Ventilkörper dichtend gegen den ersten Auswahlventilanschluss drückt. Bei einer Bypassleitung mit einer Drossel wird das Erzeugen der Rückstellkraft FR insbesondere erreicht, weil durch die Drossel ein Rückströmen der Druckluft durch die Bypassleitung wesentlich langsamer abläuft als das Rückströmen der Luft durch den ersten Auswahlventilanschluss. Bei einer Bypassleitung mit einem Bypass-Rückschlagventil wird der - über die Bypassleitung zum zweiten Auswahlventilanschluss gelangte - Zusatzsteuerdruck zur Erzeugung der Rückstellkraft - auch nach Abfallen des Drucks am ersten Auswahlventilanschluss - am zweiten Auswahlventilanschluss gehalten, weil eine Rückströmung durch das Bypass-Rückschlagventil verhindert wird.

Insbesondere ist vorgesehen, dass der Zusatzsteuerdruck durch einen Vorderachsbremsdruck oder einen Hinterachsbremsdruck oder einen Anhängerbremsdruck gebildet ist oder aus einem dieser Bremsdrücke abgeleitet ist. In einer derartigen Weiterbildung kann vorteilhaft zur Betätigung der Feststellbremszylinder ein - insbesondere in einem Betriebsbremssystem - bereits vorhandener Bremsdruck als Zusatzsteuerdruck genutzt werden. Insbesondere ist vorgesehen, dass der Zusatz-Bremsdruckanschluss pneumatisch verbindbar mit einem Vorderachsmodulator und/oder Hinterachsmodulator und/oder Anhänger-Steuerventil ist. Bei einer pneumatischen Verbindung des Zusatz-Bremsdruckanschlusses mit einem Vorderachsmodulator kann vorteilhaft ein Vorderachsbremsdruck als Zusatzsteuerdruck genutzt werden. Bei einer pneumatischen Verbindung des Zusatz-Bremsdruckanschlusses mit einem Hinterachsmodulator kann vorteilhaft ein Hinterachsbremsdruck als Zusatzsteuerdruck genutzt werden. Bei einer pneumatischen Verbindung des Zusatz-Bremsdruckanschlusses mit einem Anhänger-Steuerventil kann vorteilhaft ein Anhängerbremsdruck als Zusatzsteuerdruck genutzt werden.

Die Erfindung führt in einem dritten Aspekt zur Lösung der Aufgabe weiterhin auf ein elektronisch steuerbares pneumatisches Bremssystem mit einer Zentralsteuereinheit, mindestens einem Achsmodulator, einem Bremswertgeber und mindestens einem Federspeicher-Bremszylinder, aufweisend ein elektropneumatisches Feststellbremsmodul gemäß dem ersten Aspekt der Erfindung, ausgebildet zur Durchführung eines Verfahrens gemäß dem zweiten Aspekt der Erfindung. Beim Bremssystem werden die Vorteile des elektropneumatischen Feststellbremsmoduls und/oder des Verfahrens vorteilhaft genutzt.

In einer Weiterbildung des elektronisch steuerbaren pneumatischen Bremssystems ist vorgesehen, dass der Zusatz-Bremsdruckanschluss des elektropneumatischen Feststellbremsmoduls mit einem Vorderachsmodulator oder einem Hinterachsmodulator oder mit einem Anhänger-Steuerventil zum Bereitstellen eines Zusatzsteuerdrucks pneumatisch verbindbar ist. Insbesondere ist der Zusatz-Bremsdruckanschluss des elektropneumatischen Feststellbremsmoduls über eine Zusatz-Ansteuerleitung pneumatisch mit dem Hinterachsmodulator verbunden. Insbesondere ist der Zusatz-Bremsdruckanschluss des elektropneumatischen Feststellbremsmoduls über eine weitere Zusatz-Ansteuerleitung pneumatisch mit dem Vorderachsmodulator verbunden. Insbesondere ist der Zusatz-Bremsdruckanschluss des elektropneumatischen Feststellbremsmoduls über eine noch weitere Zusatz-Ansteuerleitung pneumatisch mit dem Anhänger-Steuerventil verbunden.

In einem vierten Aspekt gibt die Erfindung zur Lösung der Aufgabe weiterhin ein Fahrzeug, insbesondere Nutzfahrzeug, an, mit einem elektropneumatischen Feststellbremsmodul gemäß dem ersten Aspekt der Erfindung, insbesondere mit einem Bremssystem gemäß dem dritten Aspekt der Erfindung. Beim Fahrzeug werden die Vorteile des elektropneumatischen Feststellbremsmoduls und/oder des Verfahrens und/oder des elektronisch steuerbaren pneumatischen Bremssystems vorteilhaft genutzt.

In einem fünften Aspekt der Erfindung ist weiter ein elektropneumatisches Feststellbremsmodul vorgesehen für ein elektronisch steuerbares pneumatisches Bremssystem für ein Fahrzeug, insbesondere Nutzfahrzeug, mit
einem Vorratsanschluss zum Empfangen eines Vorratsdrucks,
wenigstens einem Feststellbremsanschluss zum Anschließen wenigstens eines Feststellbremszylinders,
einer den Vorratsdruck empfangenden Hauptventileinheit, die dazu ausgebildet ist, in Abhängigkeit von einem Steuerdruck einen Federspeicherdruck an dem Feststellbremsanschluss auszusteuern, und
einer den Vorratsdruck empfangenden Vorsteuerventilanordnung zum Bereitstellen des Steuerdrucks, wobei die Vorsteuerventilanordnung ein Bistabilventil aufweist, das zwischen einer ersten Belüftungsstellung und einer zweiten Entlüftungsstellung umschaltbar ist,
und einer Steuereinheit zum Bereitstellen von ersten und zweiten Schaltsignalen (S1, S2) an der Vorsteuerventilanordnung,
wobei
die Vorsteuerventilanordnung ein mit dem Bistabilventil pneumatisch in Reihe geschaltetes und in einer Steuerleitung der Hauptventileinheit angeordnetes, monostabiles Halteventil aufweist, wobei das Halteventil stromlos in einer Öffnungsstellung geöffnet ist, und
die Steuereinheit ausgebildet ist, das Halteventil zum Halten des Steuerdrucks mittels des ersten Schaltsignals in der Haltestellung zu halten, und
in der Steuerleitung zwischen dem Halteventil und einem Steueranschluss der Hauptventileinheit eine Auswahlventileinheit angeordnet ist mit einem ersten Auswahlventilanschluss zum Empfangen eines an einem Zusatz-Bremsdruckanschluss bereitgestellten Zusatzsteuerdrucks, wobei
   - die Auswahlventileinheit am ersten Auswahlventilanschluss eine Rücksperrcharakteristik aufweist derart, dass der erste Auswahlventilanschluss in einer Strömungsrichtung vom Zusatz-Bremsdruckanschluss über einen dritten Auswahlventilanschluss zum Steueranschluss öffnet und entgegen der Strömungsrichtung sperrt.

In einem sechsten Aspekt der Erfindung ist weiter ein Verfahren vorgesehen zum Betreiben eines elektropneumatischen Feststellbremsmoduls gemäß dem fünften Aspekt der Erfindung, aufweisend den Schritt:
- Befüllen des Feststellbremszylinders durch Beaufschlagen des Steueranschlusses der Hauptventilanordnung zum Aussteuern des Federspeicherdrucks an dem Feststellbremsanschluss in Abhängigkeit des Steuerdrucks,
   wobei
- das Beaufschlagen des Steueranschlusses mittels eines Zusatzsteuerdrucks erfolgt, der an dem Zusatz-Bremsdruckanschluss bereitgestellt wird und über die Auswahlventileinheit angenommen wird, wobei
- zum Beaufschlagen und zum anschließenden Halten des Zusatzsteuerdrucks am Steueranschluss das Halteventil in der Haltestellung gehalten wird.

Es soll verstanden werden, dass das Verfahren gemäß dem ersten Aspekt der Erfindung, das elektropneumatische Feststellbremsmodul gemäß dem zweiten Aspekt der Erfindung, das Bremssystem gemäß dem dritten Aspekt der Erfindung, das Fahrzeug gemäß dem vierten Aspekt der Erfindung, das elektropneumatische Feststellbremsmodul gemäß dem fünften Aspekt der Erfindung und das Verfahren gemäß dem sechsten Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein elektropneumatisches Feststellbremsmodul gemäß der Erfindung,
- Fig. 2A-D: verschiedene Weiterbildungen einer Auswahlventileinheit,
- Fig. 3: ein schematischer zeitlicher Verlauf mit unterschiedlichen Schaltstellungen von Feststellbremse, Bistabilventil und Halteventil,
- Fig. 4: ein Bremssystem mit einem elektropneumatischen Feststellbremsmodul gemäß der Erfindung,
- Fig. 5: eine weitere bevorzugte Weiterbildung eines elektropneumatischen Feststellbremsmoduls gemäß der Erfindung,
- Fig. 6: eine noch weitere bevorzugte Weiterbildung eines elektropneumatischen Feststellbremsmoduls gemäß der Erfindung.

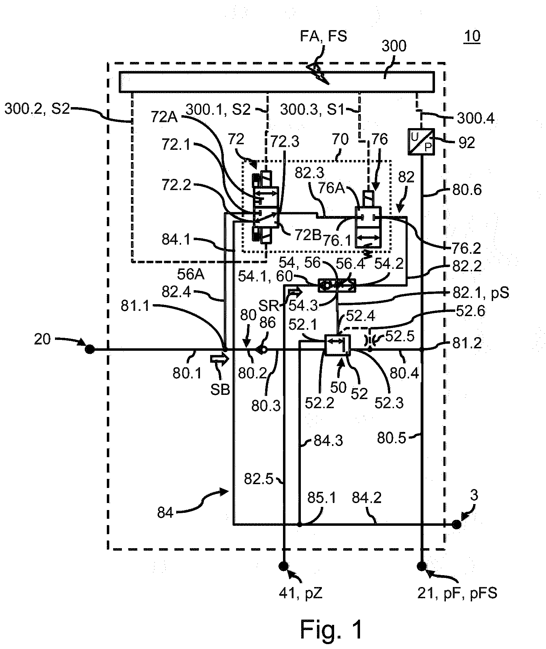

Fig. 1 zeigt ein elektropneumatisches Feststellbremsmodul 10 gemäß einer Weiterbildung der Erfindung. Ein Vorratsanschluss 20, an den sich ein erster Hauptleitungsabschnitt 80.1 einer Hauptleitung 80 anschließt, ist zum Empfangen von Druckluft für das elektropneumatische Feststellbremsmodul 10 ausgebildet. Weiter entlang der Hauptleitung 80, zwischen einem zweiten Hauptleitungsabschnitt 80.2 und einem dritten Hauptleitungsabschnitt 80.3 ist ein Hauptleitungs-Rückschlagventil 86 angeordnet, welches ausgebildet ist, sich in Befüllrichtung, d. h. in Richtung eines vom Vorratsanschluss 20 in die Hauptleitung 80 strömenden Befüllstroms SB, zu öffnen und in Gegenrichtung zu sperren.

An den dritten Hauptleitungsabschnitt 80.3 schließt sich ein Relaisventil 52 einer Hauptventileinheit 50 an, wobei das Relaisventil 52 über einen zweiten Hauptventilanschluss 52.2 mit dem dritten Hauptleitungsabschnitt 80.3 verbunden ist. Das Relaisventil 52 ist ausgebildet, über entsprechende Druckbeaufschlagung eines Steueranschlusses 52.4 den zweiten Hauptventilanschluss 52.2 und einen dritten Hauptventilanschluss 52.3 pneumatisch zu verbinden, um am dritten Hauptventilanschluss 52.3 einen Federspeicherdruck pF auszusteuern. Der dritte Hauptventilanschluss 52.3 ist wiederum mit einem vierten Hauptleitungsabschnitt 80.4 verbunden. Über eine zweite Hauptleitungsabzweigung 81.2 ist der vierte Hauptleitungsabschnitt 80.4 zum einen über einen sechsten Hauptleitungsabschnitt 80.6 mit einem Drucksensor 92 verbunden, zum anderen - zum Bereitstellen des Federspeicherdrucks pF - über einen fünften Hauptleitungsabschnitt 80.5 mit einem Feststellbremsanschluss 21.

Die Hauptleitung 80 weist zwischen ihrem ersten Hauptleitungsabschnitt 80.1 und dem zweiten Hauptleitungsabschnitt 80.2 eine erste Hauptleitungsabzweigung 81.1 auf, von welcher ein vierter Steuerleitungsabschnitt 82.4 einer Steuerleitung 82 zu einem ersten Bistabilventilanschluss 72.1 eines Bistabilventils 72 einer Vorsteuerventilanordnung 70 führt.

Das Bistabilventil 72 der Vorsteuerventilanordnung 70 ist als bistabiles 3/2-Wege-Magnetventil ausgebildet, welches vorliegend in einer Entlüftungsstellung 72B gezeigt ist. Das Bistabilventil 72 ist ausgebildet, in einer - hier nicht gezeigten - Belüftungsstellung 72A eine pneumatische Verbindung zwischen dem ersten Bistabilventilanschluss 72.1 und einem dritten Bistabilventilanschluss 72.3 herzustellen.

Die Vorsteuerventilanordnung 70 weist ein Halteventil 76 auf. Der dritte Bistabilventilanschluss 72.3 ist über einen dritten Steuerleitungsabschnitt 82.3 der Steuerleitung 82 an einen ersten Halteventilanschluss 76.1 des Halteventils 76 angeschlossen. Die Vorsteuerventilanordnung 70 kann als bauliche Einheit ausgebildet sein, gleichwohl ist es aber auch möglich, dass das Bistabilventil 72 und das Halteventil 76 als unabhängige Komponenten ausgebildet sind.

Das Halteventil 76 ist vorliegend als stromlos geöffnetes, 2/2-Wege-Magnetventil ausgebildet und vorliegend in seiner Haltestellung 76A gezeigt. In der Haltestellung 76A, die insbesondere dann vorliegt, wenn das Halteventil 76 bestromt wird, ist die pneumatische Verbindung zwischen dem ersten Halteventilanschluss 76.1 und einem zweiten Halteventilanschluss 76.2 getrennt.

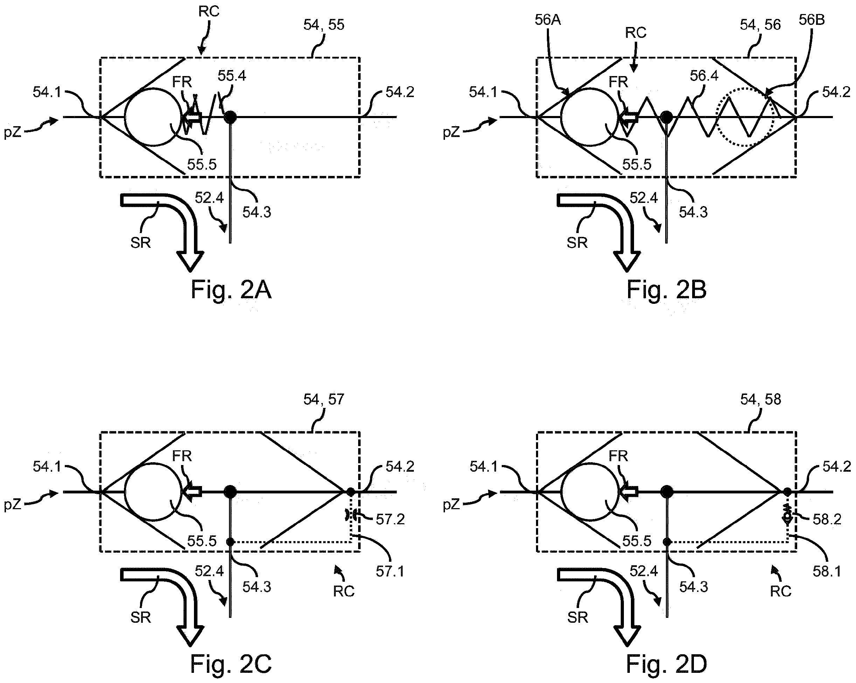

An den zweiten Halteventilanschluss 76.2 ist ein zweiter Steuerleitungsabschnitt 82.2 angeschlossen. Der zweite Steuerleitungsabschnitt 82.2 ist wiederum mit einem zweiten Auswahlventilanschluss 54.2 eines - vorliegend als Wechselventil 56 ausgebildete - Auswahlventileinheit 54 pneumatisch verbunden. Das Wechselventil 56 weist eine Vorspannfeder 56.4 auf, welche einen Ventilkörper 56.5 mit einer Federkraft gegen einen ersten Auswahlventilanschluss 54.1 drückt und somit das Wechselventil 54 federvorgespannt in einer ersten Ventilstellung 54A (s. Fig. 2B) hält. In der Ventilstellung 54A ist der zweite Auswahlventilanschluss 54.2 mit dem dritten Auswahlventilanschluss 54.3 pneumatisch verbunden.

An den dritten Auswahlventilanschluss 54.3 ist ein erster Steuerleitungsabschnitt 82.1 angeschlossen, welcher wiederum mit dem Steueranschluss 52.4 des Relaisventils 52 pneumatisch verbunden ist. Über das Beaufschlagen des Steueranschlusses 52.4 kann das Relaisventil 52 - zum Aussteuern des Federspeicherdrucks pF am dritten Hauptventilanschluss 52.3 - aktuiert werden.

Durch die Auswahlventileinheit 54 kann eine weitere, alternative Druckluftquelle zwecks Aktuierung des Relaisventils 52 an den Steueranschluss 52.4 angeschlossen werden. Hierfür ist vorliegend ein Zusatz-Bremsdruckanschluss 41 über einen fünften Steuerleitungsabschnitt 82.5 mit dem ersten Auswahlventilanschluss 54.1 pneumatisch verbunden. Der erste Auswahlventilanschluss 54.1 ist ein Zusatz-Einsteuerport 60, über den ein am Zusatz-Bremsdruckanschluss 41 bereitgestellter Zusatzsteuerdruck pZ empfangen wird.

Mit dem Wechselventil 54 in der hier gezeigten Ausbildung wird stets derjenige vom ersten und zweiten Auswahlventilanschluss 54.1, 54.2, an dem der höhere Druck herrscht, mit dem dritten Auswahlventilanschluss 54.3 pneumatisch verbunden. Dabei wird stets, gemäß der Funktionsweise eines Wechselventils, der jeweils andere Auswahlventilanschluss 54.1, 54.2, durch den Ventilkörper 54.5 versperrt, sodass es nicht zu einer Addition beider, an beiden Auswahlventilanschlüssen 54.1, 54.2 anliegenden Drücken kommt, und somit nicht zu einer, eventuell schädigenden, Drucküberhöhung am Steueranschluss 52.4.

In weiteren Weiterbildungen der Erfindung kann der Zusatz-Einsteuerport 60, insbesondere das Auswahlventil 54, unterschiedlich ausgebildet sein, beispielsweise wie in den Figuren 2A bis 2D dargestellt.

An einen zweiten Bistabilventilanschluss 72.2 des Bistabilventils 72 ist ein erster Entlüftungsleitungsabschnitt 84.1 einer Entlüftungsleitung 84 angeschlossen. In einer Entlüftungsstellung 72B des Bistabilventils ist der dritte Bistabilventilanschluss 72.3 mit dem zweiten Bistabilventilanschluss 72.2 pneumatisch verbunden. In dieser Entlüftungsstellung 72B ist somit der dritte Steuerleitungsabschnitt 82.3 der Steuerleitung 82 mit dem ersten Entlüftungsleitungsabschnitt 84.1 pneumatisch verbunden.

An den ersten Entlüftungsleitungsabschnitt 84.1 schließt sich zweiter Entlüftungsleitungsabschnitt 84.2 an, welcher wiederum mit einem Entlüftungsanschluss 3 des elektropneumatischen Feststellbremsmoduls 10 verbunden ist. Ein dritter Entlüftungsleitungsabschnitt 84.3 erstreckt sich von einem ersten Hauptventilanschluss 52.1 des Relaisventils 52 zu einer Entlüftungsleitungszusammenführung 85.1, wobei die Entlüftungsleitungszusammenführung 85.1 in der Entlüftungsleitung 84 zwischen dem ersten Entlüftungsleitungsabschnitt 84.1 und dem zweiten Entlüftungsleitungsabschnitt 84.2 angeordnet ist.

Das Relaisventil 52 weist weiter eine Drossel 52.5 in einer Hauptventil-Bypassleitung 52.6 auf, wobei die Hauptventil-Bypassleitung 52.6 ausgebildet ist zum Herstellen einer pneumatischen Verbindung zwischen dem, dem Feststellbremsanschluss 21 zugewandten, dritten Hauptventilanschluss 54.3 und einem Steueranschluss 54.4. Die pneumatische Verbindung ist durch die Drossel 52.5 mit relativ kleiner Nennweite ausgebildet, bei einem leckagebedingten Abfallen des Druckes am Steueranschluss 54.4, insbesondere des in Form des Zusatzsteuerdrucks pZ bereitgestellten Steuerdrucks pS, diesen durch ein relativ langsames Nachströmen wieder auf das Niveau des ausgesteuerten Federspeicherdrucks pF anzugleichen.

Mit einem in Fig. 1 gezeigten System ist es möglich, eine Ausfallbremsfunktionalität, das heißt eine Funktionalität zum Bremsen eines Fahrzeugs, falls ein Stromausfall oder ein Fehlersignal einer Steuereinheit 300 vorliegt, bereitzustellen. Das Bereitstellen der Ausfallbremsfunktionalität erfolgt über ein Vorhalten eines Steuerdrucks pS am Steueranschluss 52.4 des Relaisventils, mittels welchem mindestens ein Feststellbremszylinder 24 zum Lösen der Feststellbremse belüftet wird. Bei Auftreten einer Ausfallbremssituation, insbesondere falls ein Stromausfall oder ein Fehlersignal der Steuereinheit 300 vorliegt, erfolgt entsprechend durch ein Entlüften des Steueranschlusses 52.4 ein Entlüften der Feststellbremszylinder 24 zum Aktivieren der Feststellbremse. Der Steuerdruck pS wird insbesondere in Form des Zusatzsteuerdrucks pZ über den Zusatz-Bremsdruckanschluss bereitgestellt.

Gemäß dem Konzept der Erfindung wird das Entlüften des Steueranschlusses 52.4 dabei über das Halteventil 76 ermöglicht, das im Fall eines Stromausfalls FS oder eines Fehlerfalls FA der Steuereinheit 300 selbsttätig stromlos wird und öffnet.

Dadurch, dass gemäß der Erfindung ein Zusatz-Einsteuerport 60, insbesondere eine Auswahlventileinheit 54, vorgesehen ist, kann der Steueranschluss 52.4 des Relaisventils 52 insbesondere auch dann belüftet, das heißt mit Druckluft beaufschlagt werden, wenn das Bistabilventil 72 in der Entlüftungsstellung 72B geschaltet ist.

Durch eine Kombination von Halteventil 76 und einem ein Zusatz-Einsteuerport 60, insbesondere einer Auswahlventileinheit 54, kann somit der Steueranschluss 52.4 des Relaisventils 52 be- und entlüftet werden, insbesondere ohne das Bistabilventil 72 in die Belüftungsstellung 72A schalten zu müssen.

Durch diese Kombination wird vorteilhaft eine Situation vermieden, in der ein Stromausfall oder ein Fehlersignal der Steuereinheit 300 zu einem Zeitpunkt auftritt, in dem sich das Bistabilventil 72 noch in der Belüftungsstellung 72A befindet und somit ein Entlüften des Steueranschlusses 52.4 zum Erzeugen einer Ausfallbremsung nicht möglich wäre, weil in diesem Fall keine pneumatische Verbindung zwischen dem Steueranschluss 52.4 und dem Entlüftungsanschluss 3 hergestellt werden könnte.

Eine durch die Feststellbremse erzeugte Ausfallbremsung ist insbesondere geeignet für einen Betrieb des Fahrzeugs bei niedrigen Geschwindigkeiten, beispielsweise um 10 km/h, welche beispielsweise in einem automatischen Fahrbetrieb eines Fahrzeugs auftreten.

In den Figuren 2A, 2B, 2C und 2D sind unterschiedliche Weiterbildungen einer Auswahlventileinheit 54 dargestellt. In Fig. 2A ist eine erste Weiterbildung einer Auswahlventileinheit 54 dargestellt, welche ein Rückschlagventil 55 aufweist. Das Rückschlagventil 55 ist derart am ersten Auswahlventilanschluss 54.1 angeordnet, dass ein in Strömungsrichtung SR strömender Luftstrom, d. h. ein vom ersten Auswahlventilanschluss 54.1 in die Auswahlventileinheit 54 strömender Luftstrom, passieren kann, eine Luftströmung in entgegengesetzter Richtung jedoch durch das abdichtende Aufsetzen eines Ventilkörpers 55.5 verhindert wird. Der Ventilkörper 55.5 wird dabei von einer Rückschlagventil-Vorspannfeder 55.4 mit einer Rückstellkraft FR dichtend gegen den ersten Auswahlventilanschluss 54.1 gedrückt. Durch das Rückschlagventil 55 wird vorliegend eine Rücksperrcharakteristik RC verwirklicht, welche sicherstellt, dass auch in dem Fall, wenn am ersten Auswahlventilanschluss 54.1 kein Druck oder ein niedrigerer Druck als an einem zweiten Auswahlventilanschluss 54.2 anliegt, der zu diesem Zeitpunkt am Steueranschluss 52.4 anliegende Steuerdruck pS gehalten werden kann.

In Fig. 2B weist die Auswahlventileinheit 54 ein Wechselventil 56 auf. Analog zu in Fig. 2A gezeigten Weiterbildung weist auch diese Auswahlventileinheit 54 eine Rücksperrcharakteristik RC durch einen Ventilkörper 55.5 auf, welcher mittels einer weiteren Vorspannfeder 56.4 unter einer Rückstellkraft FR dichtend gegen den ersten Auswahlventilanschluss 54.1 gedrückt wird. Die in Fig. 2B gezeigte Weiterbildung ist jedoch weiterhin ausgebildet, dass der Ventilkörper 55.5 durch einen am ersten Auswahlventilanschluss 54.1 anliegenden ZusatzSteuerdruck pZ gegen den zweiten Auswahlventilanschluss 54.2 gedrückt werden kann, und diesen somit dichtend verschließt. Wenn der am ersten Auswahlventilanschluss 54.1 anliegende Zusatz-Steuerdruck pZ höher ist als ein am zweiten Auswahlventilanschluss 54.2 anliegender Druck und darüber hinaus auch die Rückstellkraft FR der Vorspannfeder 56.4 überwunden wird, so wird der Ventilkörper 55.5 entsprechend dichtend an den zweiten Auswahlventilanschluss 54.2 gedrückt.

Bei einem Wechselventil 56 wird vorteilhaft erreicht, dass sich ein am ersten Auswahlventilanschluss 54.1 anliegender Druck und zusätzlich ein am zweiten Auswahlventilanschluss 54.2 anliegender Druck nicht addieren, da stets der Anschluss, an dem der niedrigere Druck anliegt, durch den Ventilkörper 55.5 gesperrt wird. Somit kann die Gefahr eines zu hohen und möglicherweise schädlichen Drucks am Steueranschluss 52.4 verringert werden.

Die in Fig. 2C dargestellte Weiterbildung einer Auswahlventileinheit 54 weist ein weiteres Wechselventil 57 auf, welches eine Bypassleitung 57.1 zum Erzeugen einer Rückstellkraft FR aufweist. Die Bypassleitung 57.1 verbindet den zweiten und dritten Auswahlventilanschluss 54.2, 54.3 pneumatisch zum Erzeugen einer gezielten Leckage. Dies hat zur Folge, dass beim Belüften über den ersten Auswahlventilanschluss 54.1, bei dem der Ventilkörper 55.5 gegen den zweiten Auswahlventilanschluss 54.2 gedrückt wird, sich der am ersten Auswahlventilanschluss 54.1 anliegende Zusatz-Steuerdruck pZ über die Bypassleitung 57.1 auch am zweiten Auswahlventilanschluss 54.2 einstellen kann. Indem weiter in der Bypassleitung 57.1 eine Drossel 57.2 vorgesehen wird, kann vorteilhaft sichergestellt werden, dass nach einem Abfallen des Drucks, insbesondere des Zusatzsteuerdrucks pZ, am ersten Auswahlventilanschluss 54.1 eine Rückstellkraft FR aufgrund des nun am zweiten Auswahlventilanschluss 54.2 näherungsweise in Höhe des - vorher anliegenden - Zusatz-Steuerdrucks pZ den Ventilkörper 55.5 dichtend gegen den ersten Auswahlventilanschluss 54.1 drückt. Das Erzeugen der Rückstellkraft FR wird insbesondere erreicht, weil durch die Drossel 57.2 ein Rückströmen der Druckluft durch die Bypassleitung 57.1 wesentlich langsamer abläuft als das Rückströmen der Luft durch den ersten Auswahlventilanschluss 54.1.

Bei der in Fig. 2D gezeigten Weiterbildung mit einem noch weiteren Wechselventil 58 wird ebenfalls durch eine - den zweiten und dritten Auswahlventilanschluss 54.2, 54.3 verbindende - weitere Bypassleitung 58.1 eine gezielte Leckage zum Erzeugen einer Rückstellkraft FR erzeugt. Allerdings ist hier - anstelle einer Drossel - ein Bypass-Rückschlagventil 58.2 in der weiteren Bypassleitung 58.1 vorgesehen. Mittels des Bypass-Rückschlagventils 58.2 wird erreicht, dass sich beim Belüften der Auswahlventileinheit 54 über den ersten Auswahlventilanschluss 54.1 - trotz eines dichtenden Aufsetzens des Ventilkörpers 55.5 am zweiten Auswahlventilanschluss 54.2 - Druckluft über die weitere Bypassleitung 58.1 zum zweiten Auswahlventilanschluss 54.2 strömen kann, die weitere Bypassleitung 58.1 in entgegengesetzter Strömungsrichtung allerdings sperrt. Somit wird gewährleistet, dass wenn der Druck am ersten Auswahlventilanschluss 54.1 abfällt, der vorher über die weitere Bypassleitung 58.1 zum zweiten Auswahlventilanschluss 54.2 gelangte und über das Bypass-Rückschlagventil 58.2 dort gehaltene Zusatz-Steuerdruck pZ den Ventilkörper 55.5 wieder dichtend an den ersten Auswahlventilanschluss 54.1 drückt, wobei eine Rückstellkraft FR durch die erzeugte Druckdifferenz zwischen erstem und zweitem Auswahlventilanschluss 54.1, 54.2 erzeugt wird.

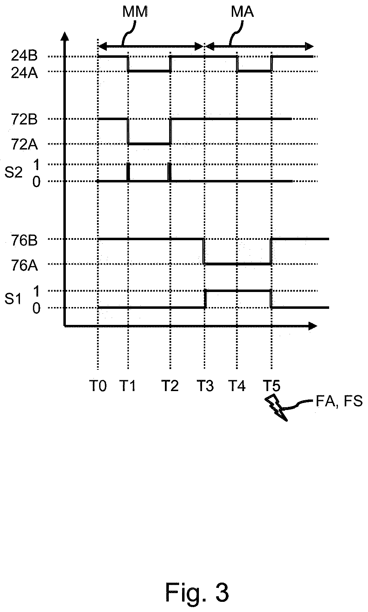

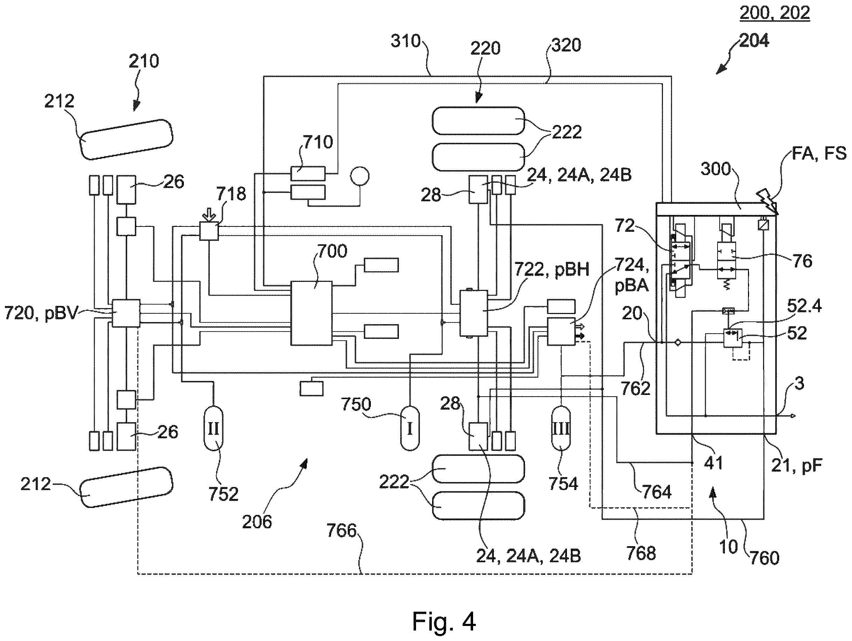

In Fig. 3 ist ein schematischer zeitlicher Ablauf unterschiedlicher Schaltstellungen 72A, 72B eines Bistabilventils 72 sowie Schaltstellungen 76A, 76B eines Halteventils 76 eines elektropneumatischen Feststellbremsmoduls 10 dargestellt. Zu einem initialen Zeitpunkt T0 befindet sich ein hier nicht dargestelltes Fahrzeug in einem manuellen Betriebsmodus MM, in welchem eine Feststellbremse des Fahrzeugs allgemein durch ein Bistabilventil 72 betätigt wird und sich das Halteventil 76 entsprechend ständig in einer Öffnungsstellung 76B befindet. Im manuellen Betriebsmodus MM wird daher das Halteventil 76 nicht betätigt, d. h. ein erstes Schaltsignal S1 beträgt 0 und das Halteventil 76 ist nicht angesteuert, insbesondere stromlos, offen. Zum initialen Zeitpunkt T0 befindet sich das Bistabilventil 72 in einer Entlüftungsstellung 72B, in der entsprechend der Steueranschluss 52.4 des Relaisventils 52 über den Entlüftungsanschluss 3 entlüftet ist, und somit am Feststellbremsanschluss 21 kein Federspeicherdruck pF bereitgestellt wird, wodurch das Fahrzeug mittels mindestens eines Feststellbremszylinders 24 - in einer Bremsstellung 24B (s. Fig. 4) - gebremst wird. Aufgrund der bremsenden Wirkung der Entlüftungsstellung 72B auf die Feststellbremse wird die Entlüftungsstellung 72B auch als Parkbremsstellung bezeichnet.

Beispielhaft für den manuellen Betriebsmodus MM wird gezeigt, wie zu einem ersten Zeitpunkt T1 das Bistabilventil über ein einmaliges Ansteuern mittels eines zweiten Schaltsignals S2 von der Entlüftungsstellung 72B in eine Belüftungsstellung 72A geschaltet wird. Nach dem Zeitpunkt T1 ist die Feststellbremse somit gelöst und der Feststellbremszylinder 24 befindet sich in einer Lösestellung 24A. Entsprechend kann das Fahrzeug im manuellen Modus, insbesondere durch einen menschlichen Fahrer, normal bewegt und im Betrieb insbesondere mittels eines Betriebsbremssystems 206 gebremst werden. Zu einem zweiten Zeitpunkt T2 ist die Fahrt abgeschlossen und mittels eines einmaligen Ansteuerns durch das zweite Steuersignal S2 wird das Bistabilventil 72 wieder in seine Entlüftungsstellung 72B versetzt, wodurch der mindestens eine Feststellbremszylinder 24 betätigt und das Fahrzeug gebremst wird. Das Bistabilventil 72 wird gemäß seiner Funktionsweise stets nur zum Umschalten angesteuert und verharrt danach ohne Ansteuerung in seinem geschalteten Zustand.

Zu einem dritten Zeitpunkt T3 wird ein automatischer Betriebsmodus MA initiiert, in dem gemäß dem Konzept der Erfindung eine Ausfallbrems-Funktionalität bereitgestellt wird. Der automatische Betriebsmodus MA kann insbesondere bei einem autonomen oder automatisierten Fahren eines Fahrzeuges mit geringerer Geschwindigkeit, beispielsweise in einem Rangierbetrieb auf einem abgegrenzten Gelände o.ä. eingesetzt werden.

Hierzu befindet sich das Bistabilventil 72 in seiner - den Feststellbremszylinder 24 entlüftenden - Entlüftungsstellung 72B und muss während des automatischen Betriebsmodus MA nicht geschaltet werden. Das Halteventil 76 hingegen wird zum dritten Zeitpunkt T3 durch ein Ansteuern mittels des ersten Schaltsignals S1 von seiner Öffnungsstellung 76B in seine Haltestellung 76A geschaltet und durch entsprechendes kontinuierliches Ansteuern mittels des ersten Schaltsignal S1 in der Haltestellung 76A gehalten.

Zu einem vierten Zeitpunkt T4 wird nun über einen Zusatz-Bremsdruckanschluss 41 und eine Auswahlventileinheit 54 ein Zusatzsteuerdruck pZ am Steueranschluss 52.4 bereitgestellt, wodurch das Relaisventil 52 einen entsprechenden Federspeicherdruck pF zum Lösen des mindestens einen Feststellbremszylinders 24 aussteuert und die Feststellbremse FB somit löst.

Auch nach einem Abfallen des Druckes am Zusatz-Bremsdruckanschluss 41 wird der Zusatzsteuerdruck pZ - durch die Rücksperrcharakteristik RC der Auswahlventileinheit 54 sowie das in seiner Haltestellung 76A befindliche Halteventil 76 - gehalten.

Das Halteventil 76 übernimmt in der Haltestellung 76A somit die Funktion des Bistabilventils 72 dahingehend, dass es im automatischen Betriebsmodus MA einen Steuerdruck pS am Steueranschluss 52.4 des Relaisventils 52 hält, um den Feststellbremszylinder 24 in einer Lösestellung 24A zu halten.

Zu einem fünften Zeitpunkt T5 tritt nun während des automatischen Betriebsmodus MA ein Fehlerfall FA oder ein Stromausfall FS der Steuereinheit 300 auf. Gemäß dem Konzept der Erfindung entfällt in diesem Moment das erste Schaltsignal S1, wodurch das Halteventil 76 selbsttätig von seiner Haltestellung 76A in seine Öffnungsstellung 76B zurückspringt und der Feststellbremszylinder 24 entlüftet und somit zur Ausführung einer Ausfallbremsung in seine Bremsstellung 24B versetzt wird.

Fig. 4 zeigt ein elektronisch steuerbares pneumatisches Bremssystem 204. Das elektronisch steuerbare pneumatische Bremssystem 204 ist vorliegend in einem als Nutzfahrzeug 202 ausgebildeten Fahrzeug 200 eingesetzt, welches hier stark schematisch dargestellt ist, insbesondere mit zwei Vorderrädern 212 einer Vorderachse 210 und vier Hinterrädern 222 einer Hinterachse 220.

Eine Zentralsteuereinheit 700 ist mittels einer Zentralsteuerleitung 310 mit einer Steuereinheit 300 des elektropneumatischen Feststellbremsmodul 10 signalführend verbunden. Die Steuereinheit 300 wird weiterhin über eine Versorgungsleitung 320 von einer Energieversorgung 710 versorgt.

Zwei Betriebsbremszylinder 26, die jeweils einem Vorderrad 212 der Vorderachse 210 zugeordnet sind, können mittels eines Bremswertgebers 718 zur bremsenden Betätigung angesteuert werden, wobei die Betriebsbremszylinder 26 über einen Vorderachsmodulator 720 mit Druckluft aus einem zweiten Druckluftvorrat 752 belüftet werden, indem der Vorderachsmodulator 720 einen Vorderachsbremsdruck pBV bereitstellt.

In analoger Weise können zwei Feststellbremszylinder 24, die jeweils den Hinterrädern 222 der Hinterachse 220 zugeordnet sind, eine Betriebsbremskammer 28 aufweisen, welche, vom Bremswertgeber 718 gesteuert, über einen Hinterachsmodulator 722 zwecks Bremsung mit Druckluft aus einem ersten Druckluftvorrat 750 beaufschlagt werden können. Hierzu stellt der Hinterachsmodulator 722 einen Hinterachsbremsdruck pBH bereit.

Weiterhin weist das Bremssystem 204 ein Anhänger-Steuerventil 724 zur Bereitstellung eines Anhängerbremsdrucks pBA auf, welches mit einem hier nicht gezeigten Anhänger des Fahrzeugs 200 - zur Versorgung einer Bremsanlage des Anhängers - pneumatisch verbindbar ist.

Die beiden Feststellbremszylinder 24 weisen jeweils eine Federspeicherbremse auf und sind mittels einer Feststellbremsleitung 760 mit einem Feststellbremsanschluss 21 des elektropneumatischen Feststellbremsmoduls 10 pneumatisch verbunden.

Mittels des elektropneumatischen Feststellbremsmoduls 10 kann den Feststellbremszylindern 24 ein Federspeicherdruck pF bereitgestellt werden, um jeweils den Feststellbremszylinder 24 zu belüften und somit aus einer Bremsstellung 24B in eine Lösestellung 24A zu bewegen.

Über eine Druckluft-Versorgungsleitung 762 und einen Vorratsanschluss 20 wird dem elektropneumatischen Feststellbremsmodul 10 Druckluft von einem dritten Druckluftvorrat 754 bereitgestellt. Sowohl im manuellen Betriebsmodus MM als auch im automatischen Betriebsmodus MA werden die Feststellbremszylinder 24 über den Vorratsanschluss 20 aus dem dritten Druckluftvorrat 754 mit Druckluft versorgt, um diese in die Lösestellung 24A zu schalten. Allerdings erfolgt das Ansteuern des Relaisventils 52 zum Aussteuern des Federspeicherdrucks pF im manuellen Betriebsmodus MM, indem das Bistabilventil 72 geschaltet wird, um den Steueranschluss 52.4 des Relaisventils 52 mit Druck aus dem dritten Druckluftvorrat 754 zu beaufschlagen. Im automatischen Betriebsmodus MA hingegen erfolgt das Beaufschlagen des Steueranschlusses 52.4 zum Ansteuern des Relaisventils 52 über einen Zusatz-Bremsdruckanschluss 41, welcher vorliegend über eine Zusatz-Ansteuerleitung 764 vom ersten Druckluftvorrat 750 gespeist wird. Über den Hinterachsmodulator 722 kann der Hinterachsbremsdruck pBH über die Zusatz-Ansteuerleitung 764 als Zusatzsteuerdruck pZ am Zusatz-Bremsdruckanschluss 41 bereitgestellt werden, wobei der Hinterachsmodulator 722 von der Zentralsteuereinheit 700 im automatischen

Betriebsmodus MA - zur selektiven Bereitstellung des Hinterachsbremsdrucks pBH als Zusatzsteuerdruck pZ - ansteuerbar ist.

Zusätzlich oder alternativ kann eine weitere Zusatz-Ansteuerleitung 766 vorgesehen sein, welche den Vorderachsmodulator 720 pneumatisch mit dem Zusatz-Bremsdruckanschluss 41 verbindet, um den Vorderachsbremsdruck pBV als Zusatzsteuerdruck pZ am Zusatz-Bremsdruckanschluss 41 bereitzustellen.

Zusätzlich oder alternativ kann eine noch weitere Zusatz-Ansteuerleitung 768 vorgesehen sein, welche das Anhänger-Steuerventil 724 pneumatisch mit dem Zusatz-Bremsdruckanschluss 41 verbindet, um den Anhängerbremsdrucks pBA als Zusatz-Bremsdruck pZ am Zusatz-Bremsdruckanschluss 41 bereitzustellen.

Die Steuereinheit 300 wird über eine Versorgungsleitung 320 von einer Energieversorgung 710 mit Strom versorgt.

Bei der Steuereinheit 300 kann es zu einem Stromausfall FS kommen, wenn ein Fehler in der Energieversorgung 710 und/oder in der Versorgungsleitung 320 vorliegt. Weiterhin kann ein Fehlerfall FA in der Steuereinheit 300 auftreten, wenn durch die Steuereinheit 300 und/oder die Zentralsteuereinheit 700 die Sicherheit des Fahrzeugs nicht mehr gewährleistet werden kann. Ein solcher Fall kann beispielsweise beim Fehlen von, für den Fahrbetrieb relevanten, Sensorinformationen oder widersprüchlichen Sensorinformationen vorliegen oder wenn ein auf Sensorinformationen basierender Zustand nicht von der Steuerlogik verarbeitet werden kann.

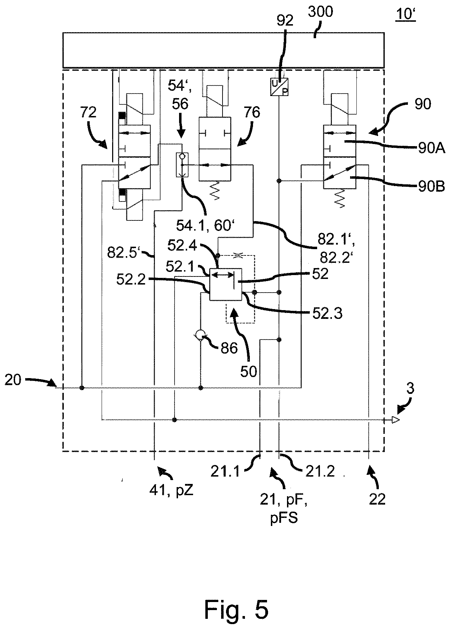

Fig. 5 zeigt eine weitere bevorzugte Ausführungsform eines elektropneumatischen Feststellbremsmoduls 10` gemäß der Erfindung. Bei dem elektropneumatischen Feststellbremsmodul 10' ist der Zusatz-Einsteuerport 60' als erster Auswahlventilanschluss 54.1 einer als Wechselventil 56 ausgebildeten, weiteren Auswahlventilanordnung 54' gebildet. Im Unterschied zu der in Fig. 1 gezeigten Ausführungsform ist die weitere Auswahlventilanordnung 54` im dritten Steuerleitungsabschnitt 82.3', nämlich zwischen dem Bistabilventil 72 und dem Halteventil 76, angeordnet. Entsprechend sind ein erster Steuerleitungsabschnitt 82.1' und ein zweiter Steuerleitungsabschnitt 82.2' als ein gemeinsamer Steuerleitungsabschnitt ausgebildet, der das Halteventil 76 mit dem Steueranschluss 52.4 des Relaisventils 52 der Hauptventilanordnung 50 pneumatisch verbindet. Vorliegend weist der Feststellbremsanschluss 21 einen ersten Feststellbremsanschluss 21.1 und einen zweiten Feststellbremsanschluss 21.2 auf. In allen Ausführungsformen kann der Feststellbremsanschluss 21 auch als einfacher Feststellbremsanschluss 21 ausgebildet sein, wie z. B. in Fig. 1 gezeigt.

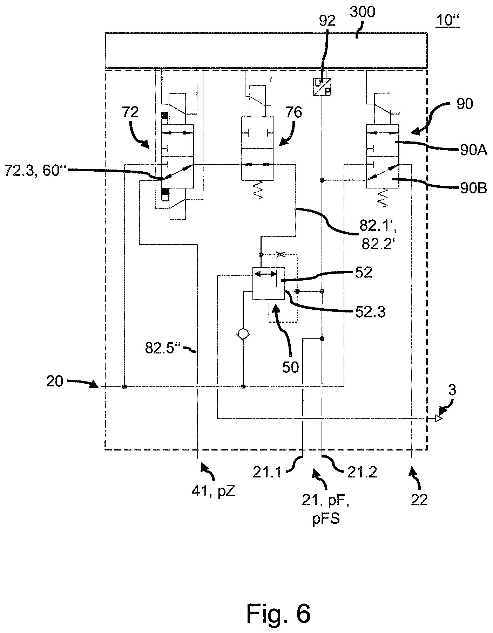

Fig. 6 zeigt eine noch weitere bevorzugte Ausführungsform eines elektropneumatischen Feststellbremsmoduls 10" gemäß der Erfindung. Bei dem elektropneumatischen Feststellbremsmodul 10" ist der Zusatz-Einsteuerport 60" als dritter Bistabilventilanschluss 72.3 des Bistabilventils 72 ausgebildet. In dieser Weiterbildung wird somit der dritte Bistabilventilanschluss 72.3 nicht oder nicht ausschließlich zur Entlüftung verwendet, sondern ist pneumatisch mittels eines fünften Steuerleitungsabschnitts 82.5" mit dem Zusatz-Steueranschluss 41 verbunden zum Empfangen eines Zusatz-Steuerdrucks pZ. Analog zu der in Fig. 5 gezeigten Weiterbildung ist hier ein erster Steuerleitungsabschnitt 82.1" und ein zweiter Steuerleitungsabschnitt 82.2"als gemeinsamer Steuerleitungsabschnitt ausgebildet.

Die in Fig. 5 gezeigte Weiterbildung des elektropneumatischen Feststellbremsmoduls 10' und die in Fig. 6 gezeigte Weiterbildung des elektropneumatischen Feststellbremsmoduls 10" können optional ein Anhängerventil 90 aufweisen, das bevorzugt als 3/2-Wegeventil, besonders bevorzugt als 3/2-Wege-Magnetventil ausgebildet ist. Das Anhängerventil ist insbesondere ausgebildet, in einer ersten, Vorratsstellung 90A den Vorratsanschluss 1 pneumatisch mit einem Anhängeranschluss 22 zu verbinden und in einer zweiten, Steuerstellung 90B den dritten Hauptventilanschluss 52.3 pneumatisch mit dem Anhängeranschluss 22 zu verbinden. Mittels eines Anhängerventils 90 kann vorteilhaft ein mit einem Fahrzeug 200 verbundener Anhänger mit Druckluft versorgt werden, und zwar insbesondere wahlweise mit einem Vorratsdruck pV oder mit einem Federspeicherdruck pF. Mittels eines Anhängerventils 90 kann insbesondere eine Feststellbremse des Anhängers mit einem Federspeicherdruck pF versorgt werden.

### Bezugszeichenliste (Teil der Beschreibung)

- 3: Entlüftungsanschluss
- 10: elektropneumatisches Feststellbremsmodul
- 20: Vorratsanschluss
- 21: Feststellbremsanschluss
- 21.1, 21.2: erster, zweiter Feststellbremsanschluss
- 22: Anhängeranschluss
- 24: Feststellbremszylinder
- 24A: Lösestellung
- 24B: Bremsstellung
- 26: Betriebsbremszylinder
- 28: Betriebsbremskammer
- 41: Zusatz-Bremsdruckanschluss
- 50: Hauptventileinheit
- 52: Relaisventil
- 52.1: erster Hauptventilanschluss
- 52.2: zweiter Hauptventilanschluss
- 52.3: dritter Hauptventilanschluss
- 52.4: Steueranschluss
- 52.5: Drossel
- 52.6: Hauptventil-Bypassleitung
- 54: Auswahlventileinheit
- 54.1: erster Auswahlventilanschluss
- 54.2: zweiter Auswahlventilanschluss
- 54.3: dritter Auswahlventilanschluss
- 54.4: Steueranschluss
- 54.5: Ventilkörper
- 54A, 54B: Ventilstellung der Auswahlventileinheit
- 55: Rückschlagventil
- 55.4: Rückschlagventil-Vorspannfeder
- 55.5: Ventilkörper
- 56: Wechselventil
- 56.4: Vorspannfeder
- 56.5: Ventilkörper
- 57: weiteres Wechselventil
- 57.1: Bypassleitung
- 57.2: Drossel
- 58: noch weiteres Wechselventil
- 58.2: Bypass-Rückschlagventil
- 60: Zusatz-Einsteuerport
- 70: Vorsteuerventilanordnung
- 72: Bistabilventil
- 72.1: erster Bistabilventilanschluss
- 72.2: zweiter Bistabilventilanschluss
- 72.3: dritter Bistabilventilanschluss
- 72A: Belüftungsstellung des Bistabilventils
- 72B: Entlüftungsstellung des Bistabilventils
- 76: Halteventil
- 76.1: erster Halteventilanschluss
- 76.2: zweiter Halteventilanschluss
- 76A: Haltestellung
- 76B: Öffnungsstellung
- 80: Hauptleitung
- 80.1: erster Hauptleitungsabschnitt
- 80.2: zweiter Hauptleitungsabschnitt
- 80.3: dritter Hauptleitungsabschnitt
- 80.4: vierter Hauptleitungsabschnitt
- 80.5: fünfter Hauptleitungsabschnitt
- 80.6: sechster Hauptleitungsabschnitt
- 81.1: erste Hauptleitungsabzweigung
- 81.2: zweite Hauptleitungsabzweigung
- 82: Steuerleitung
- 82.1: erster Steuerleitungsabschnitt
- 82.2: zweiter Steuerleitungsabschnitt
- 82.3: dritter Steuerleitungsabschnitt
- 82.4: vierter Steuerleitungsabschnitt
- 82.5: fünfter Steuerleitungsabschnitt
- 84: Entlüftungsleitung
- 84.1: erster Entlüftungsleitungsabschnitt
- 84.2: zweiter Entlüftungsleitungsabschnitt
- 84.3: dritter Entlüftungsleitungsabschnitt
- 85.1: Entlüftungsleitungszusammenführung
- 86: Hauptleitungs-Rückschlagventil
- 90: Anhängerventil
- 90.1: erster Anhängerventilanschluss
- 90.2: zweiter Anhängerventilanschluss
- 90.3: dritter Anhängerventilanschluss
- 90A: Vorratsstellung des Anhängerventils
- 90B: Steuerstellung des Anhängerventils
- 92: Drucksensor
- 200: Fahrzeug
- 202: Nutzfahrzeug
- 204: Bremssystem
- 206: Betriebsbremssystem
- 210: Vorderachse
- 212: Vorderräder
- 220: Hinterachse
- 222: Hinterräder
- 300: Steuereinheit
- 310: Zentralsteuerleitung
- 320: Versorgungsleitung
- 700: Zentralsteuereinheit
- 710: Energieversorgung
- 718: Bremswertgeber
- 720: Vorderachsmodulator
- 722: Hinterachsmodulator
- 724: Anhänger-Steuerventil
- 750: erster Druckluftvorrat
- 752: zweiter Druckluftvorrat
- 754: dritter Druckluftvorrat
- 760: Feststellbremsleitung
- 762: Druckluft-Versorgungsleitung
- 764: Zusatz-Ansteuerleitung
- 766: weitere Zusatz-Ansteuerleitung
- 768: noch weitere Zusatz-Ansteuerleitung
- 820: Druckluftspeicher

- BEF: Befüllzustand
- FA: Fehlerfall
- FB: Feststellbremse
- FR: Rückstellkraft
- FS: Stromausfall
- MA: automatischer Betriebsmodus
- MM: manueller Betriebsmodus
- pBA: Anhängerbremsdruck
- pBH: Hinterachsbremsdruck
- pBV: Vorderachsbremsdruck
- pF: Federspeicherdruck
- pFS: Soll-Federspeicherdruck
- pHA: Hinterachs-Bremsdruck
- pS: Steuerdruck
- pV: Vorratsdruck
- pZ: Zusatzsteuerdruck
- RC: Rücksperrcharakteristik
- S1: erstes Schaltsignal
- S2: zweites Schaltsignal
- SB: Befüllstrom
- SR: Strömungsrichtung
- T0: initialer Zeitpunkt
- T1: erster Zeitpunkt
- T2: zweiter Zeitpunkt
- T3: dritter Zeitpunkt
- T4: vierter Zeitpunkt
- T5: fünfter Zeitpunkt

## Patentansprüche

1. Verfahren zum Betreiben eines elektropneumatischen Feststellbremsmoduls (10, 10', 10") für ein elektronisch steuerbares pneumatisches Bremssystem (204) für ein Fahrzeug (200), insbesondere Nutzfahrzeug (202), mit
einem Vorratsanschluss (20) zum Empfangen eines Vorratsdrucks (pV),
wenigstens einem Feststellbremsanschluss (21) zum Anschließen wenigstens eines Feststellbremszylinders (24),
einer den Vorratsdruck (pV) empfangenden Hauptventileinheit (50), die dazu ausgebildet ist, in Abhängigkeit von einem Steuerdruck (pS) einen Federspeicherdruck (pF) an dem Feststellbremsanschluss (21) auszusteuern, und
einer den Vorratsdruck (pV) empfangenden Vorsteuerventilanordnung (70) zum Bereitstellen des Steuerdrucks (pS), wobei die Vorsteuerventilanordnung (70) ein Bistabilventil (72) aufweist, das zwischen einer ersten Belüftungsstellung (72A) und einer zweiten Entlüftungsstellung (72B) umschaltbar ist,
und einer Steuereinheit (300) zum Bereitstellen von ersten und zweiten Schaltsignalen (S1, S2) an der Vorsteuerventilanordnung (70), wobei
die Vorsteuerventilanordnung (70) ein mit dem Bistabilventil (72) pneumatisch in Reihe geschaltetes und in einer Steuerleitung (82) der Hauptventileinheit (50) angeordnetes, monostabiles Halteventil (76) aufweist, wobei das Halteventil (76) stromlos in einer Öffnungsstellung (76B) geöffnet ist, und
die Steuereinheit (300) ausgebildet ist, das Halteventil (76) zum Halten des Steuerdrucks (pS) mittels des ersten Schaltsignals (S1) in der Haltestellung (76A) zu halten, und
in der Steuerleitung (82) ein Zusatz-Einsteuerport (60) angeordnet ist zum Empfangen eines an einem Zusatz-Bremsdruckanschluss (41) bereitgestellten Zusatzsteuerdrucks (pZ),aufweisend den Schritt:
- Befüllen des Feststellbremszylinders (24) durch Beaufschlagen des Steueranschlusses (52.4) der Hauptventilanordnung (50) zum Aussteuern des Federspeicherdrucks (pF) an dem Feststellbremsanschluss (21) in Abhängigkeit des Steuerdrucks (pS), wobei
- das Beaufschlagen des Steueranschlusses (52.4) mittels eines Zusatzsteuerdrucks (pZ) erfolgt, der an dem Zusatz-Bremsdruckanschluss (41) bereitgestellt wird und über den Zusatz-Einsteuerport (60) angenommen wird,
- das Halteventil (76) bei einem Fehler in einer elektronischen Komponente, insbesondere in einer Steuereinheit (300) des Bremssystems (204), und/oder bei einem Stromausfall selbsttätig in eine Öffnungsstellung (76B) zum Entlüften des Steueranschlusses (52.4) schaltet, wobei der Steueranschluss (52.4) der Hauptventilanordnung (50) zum Entlüften des Feststellbremsanschlusses (21) entlüftet wird
**dadurch gekennzeichnet, dass**
- zum Halten des Zusatzsteuerdrucks (pZ) am Steueranschluss (52.4) das Halteventil (76) in der Haltestellung (76A) gehalten wird.

2. Verfahren nach Anspruch 1, **dadurch gekennzeichnet, dass**
- zum Beaufschlagen des Steueranschlusses (52.4) mit dem Zusatzsteuerdruck (pZ) das Halteventil (76) in die Öffnungsstellung (76B) geschaltet wird.

3. Verfahren nach Anspruch 1 oder 2, **dadurch gekennzeichnet, dass**
- zum Halten des Zusatzsteuerdrucks (pZ) am Steueranschluss (52.4) im Anschluss an ein Beaufschlagen des Steueranschluss (52.4) mit dem Zusatzsteuerdruck (pZ), das Halteventil (76) in der Haltestellung (76A) gehalten wird.

4. Verfahren nach einem der Ansprüche 1 bis 3, **dadurch gekennzeichnet, dass** zum Beaufschlagen des Steueranschlusses (52.4) mit dem Zusatzsteuerdruck (pZ) das Bistabilventil (72) in die Entlüftungsstellung (72B) geschaltet wird und/oder in der Entlüftungsstellung (72B) verbleibt.

5. Verfahren nach einem der Ansprüche 1 bis 4, **dadurch gekennzeichnet, dass** das Entlüften des Steueranschlusses (52.4) weiter über das Bistabilventil (72) erfolgt, wobei sich das Bistabilventil (72) in einem automatischen Betriebsmodus (MA) ständig in der Entlüftungsstellung (72B) befindet.

6. Verfahren nach einem der Ansprüche 1 bis 5, **dadurch gekennzeichnet, dass** der Zusatzsteuerdruck (pZ) von einer zusätzlichen Bremskomponente und/oder von einem Achsmodulator (720, 722, 724), insbesondere von einem Vorderachsmodulator (720), von einem Hinterachsmodulator (722) oder von einem Anhänger-Steuerventil (724), bereitgestellt wird.

7. Verfahren nach einem der Ansprüche 1 bis 6, **dadurch gekennzeichnet, dass** der Zusatzsteuerdruck (pZ) durch einen Vorderachsbremsdruck (pBV) oder einen Hinterachsbremsdruck (pBH) oder einen Anhängerbremsdruck (pBA) gebildet ist oder aus einem dieser Bremsdrücke (pBV, pBH, pBA) abgeleitet ist.

8. Verfahren nach einem der Ansprüche 1 bis 7, **dadurch gekennzeichnet, dass** das Beaufschlagen des Steueranschlusses (52.4) mittels des Zusatzsteuerdrucks (pZ) beim Erreichen eines Soll-Federspeicherdrucks (pFS) für den am Feststellbremsanschluss (21) bereitgestellten Federspeicherdruck (pF) beendet wird.

9. Verfahren nach einem der Ansprüche 1 bis 8, **dadurch gekennzeichnet, dass** das Beaufschlagen des Steueranschlusses (52.4) mittels des Zusatzsteuerdrucks (pZ) während eines Beaufschlagungszeitraums (TB) erfolgt, wobei der Beaufschlagungszeitraum (TB) eine Dauer zwischen 0.5 und 1 Sekunde hat.

10. Verfahren nach einem der Ansprüche 1 bis 9, **dadurch gekennzeichnet, dass** ein erneutes Beaufschlagen des Steueranschlusses (52.4) mittels des Zusatzsteuerdrucks (pZ) erfolgt, wenn der Federspeicherdruck (pF) auf einen Wert unterhalb des Soll-Federspeicherdrucks (pFS) abgefallen ist.

11. Verfahren nach einem der Ansprüche 1 bis 10, **dadurch gekennzeichnet, dass** vor dem Beaufschlagen des Steueranschlusses (52.4) mit dem Zusatzsteuerdruck (pZ) das Halteventil (76) in seine Haltestellung (76A) geschaltet wird.

12. Elektropneumatisches Feststellbremsmodul (10, 10', 10") für ein elektronisch steuerbares pneumatisches Bremssystem (204) für ein Fahrzeug (200), insbesondere Nutzfahrzeug (202), mit
einem Vorratsanschluss (20) zum Empfangen eines Vorratsdrucks (pV),
wenigstens einem Feststellbremsanschluss (21) zum Anschließen wenigstens eines Feststellbremszylinders (24),
einer den Vorratsdruck (pV) empfangenden Hauptventileinheit (50), die dazu ausgebildet ist, in Abhängigkeit von einem Steuerdruck (pS) einen Federspeicherdruck (pF) an dem Feststellbremsanschluss (21) auszusteuern, und
einer den Vorratsdruck (pV) empfangenden Vorsteuerventilanordnung (70) zum Bereitstellen des Steuerdrucks (pS), wobei die Vorsteuerventilanordnung (70) ein Bistabilventil (72) aufweist, das zwischen einer ersten Belüftungsstellung (72A) und einer zweiten Entlüftungsstellung (72B) umschaltbar ist, und einer Steuereinheit (300) zum Bereitstellen von ersten und zweiten Schaltsignalen (S1, S2) an der Vorsteuerventilanordnung (70), wobei
die Vorsteuerventilanordnung (70) ein mit dem Bistabilventil (72) pneumatisch in Reihe geschaltetes und in einer Steuerleitung (82) der Hauptventileinheit (50) angeordnetes, monostabiles Halteventil (76) aufweist, wobei das Halteventil (76) stromlos in einer Öffnungsstellung (76B) geöffnet ist, und
die Steuereinheit (300) ausgebildet ist, das Halteventil (76) zum Halten des Steuerdrucks (pS) mittels des ersten Schaltsignals (S1) in der Haltestellung (76A) zu halten, und
in der Steuerleitung (82) ein Zusatz-Einsteuerport (60) angeordnet ist zum Empfangen eines an einem Zusatz-Bremsdruckanschluss (41) bereitgestellten Zusatzsteuerdrucks (pZ),
- das Halteventil (76) bei einem Fehler in einer elektronischen Komponente, insbesondere in einer Steuereinheit (300) des Bremssystems (204), und/oder bei einem Stromausfall selbsttätig in eine Öffnungsstellung (76B) zum Entlüften des Steueranschlusses (52.4) schaltet, wobei der Steueranschluss (52.4) der Hauptventilanordnung (50) zum Entlüften des Feststellbremsanschlusses (21) entlüftet wird,
**dadurch gekennzeichnet, dass**
- zum Halten des Zusatzsteuerdrucks (pZ) am Steueranschluss (52.4) das Halteventil (76) in der Haltestellung (76A) gehalten wird.

13. Elektropneumatisches Feststellbremsmodul (10, 10', 10") nach Anspruch 12, **dadurch gekennzeichnet, dass** der Zusatz-Einsteuerport (60) als ein erster Auswahlventilanschluss (54.1) einer Auswahlventileinheit (54) zum Empfangen des Zusatzsteuerdrucks (pZ) gebildet ist, wobei
- die Auswahlventileinheit (54) am ersten Auswahlventilanschluss (54.1) eine Rücksperrcharakteristik (RC) aufweist derart, dass der erste Auswahlventilanschluss (54.1) in einer Strömungsrichtung (SR) vom Zusatz-Bremsdruckanschluss (41) über einen dritten Auswahlventilanschluss (54.3) zum Steueranschluss (52.4) öffnet und entgegen der Strömungsrichtung (SR) sperrt.

14. Elektropneumatisches Feststellbremsmodul (10, 10', 10") nach Anspruch 13, **dadurch gekennzeichnet, dass** die Auswahlventileinheit (54) zwischen dem Halteventil (76) und einem Steueranschluss (52.4) der Hauptventileinheit (50) angeordnet ist.

15. Elektropneumatisches Feststellbremsmodul (10, 10', 10") nach Anspruch 13, **dadurch gekennzeichnet, dass** die Auswahlventileinheit (54) zwischen dem Bistabilventil (72) und dem Halteventil (76) angeordnet ist.

16. Elektropneumatisches Feststellbremsmodul (10, 10', 10") nach Anspruch 12, **dadurch gekennzeichnet, dass** der Zusatz-Einsteuerport (60) durch einen dritten Bistabilventilanschluss (72.3) des Bistabilventils (72) gebildet ist, der in der Entlüftungsstellung (72B) pneumatisch mit dem Halteventil (76) verbunden ist.

17. Elektropneumatisches Feststellbremsmodul (10, 10', 10") nach einem der Ansprüche 12 bis 16, **dadurch gekennzeichnet, dass** die Auswahlventileinheit (54) ein Wechselventil (56) aufweist, welches ausgebildet ist, den ersten oder einen zweiten Auswahlventilanschluss (54.1, 54.2) mit dem dritten Auswahlventilanschluss (54.3) zu verbinden, wobei von dem ersten und zweiten Auswahlventilanschluss (54.1, 54.2) derjenige geöffnet wird, an dem der höhere Druck anliegt.

18. Elektropneumatisches Feststellbremsmodul (10, 10', 10") nach Anspruch 17, **dadurch gekennzeichnet, dass** das Wechselventil (54) eine Vorspannfeder (54.4) aufweist zum federbelasteten Festlegen einer Ventilstellung (54A, 54B), insbesondere zum federbelasteten Festlegen der ersten, den zum Zusatz-Bremsdruckanschluss (41) führenden ersten Auswahlventilanschluss (54.1) sperrenden, Ventilstellung (54A).

19. Elektropneumatisches Feststellbremsmodul (10, 10', 10") nach einem der Ansprüche 12 bis 18, **dadurch gekennzeichnet, dass** der Zusatz-Einsteuerport (60) und/oder die Auswahlventileinheit (54, 54') am ersten Auswahlventilanschluss (54.1) ein entgegen der Strömungsrichtung (SR) sperrendes Rückschlagventil (55) aufweist.

20. Elektropneumatisches Feststellbremsmodul (10, 10', 10") nach einem der Ansprüche 12 bis 19, **dadurch gekennzeichnet, dass** die Auswahlventileinheit (54, 54') eine Bypassleitung (57.1, 58.1) aufweist, wobei die Bypassleitung (57.1, 58.1) den zweiten und dritten Auswahlventilanschluss (54.2, 54.3) pneumatisch verbindet und eine Drossel (57.2) und/oder ein Bypass-Rückschlagventil (58.2) aufweist.

21. Elektropneumatisches Feststellbremsmodul (10, 10', 10") nach einem der Ansprüche 12 bis 20, **dadurch gekennzeichnet, dass** der Zusatzsteuerdruck (pZ) durch einen Vorderachsbremsdruck (pBV) oder einen Hinterachsbremsdruck (pBH) oder einen Anhängerbremsdruck (pBA) gebildet ist oder aus einem dieser Bremsdrücke (pBV, pBH, pBA) abgeleitet ist.

22. Elektronisch steuerbares pneumatisches Bremssystem (204) mit einer Zentralsteuereinheit (700), mindestens einem Achsmodulator (720, 722, 724), einem Bremswertgeber (730) und mindestens einem Federspeicher-Bremszylinder (24), aufweisend ein elektropneumatisches Feststellbremsmodul (10, 10', 10") nach einem der Ansprüche 12 bis 20, ausgebildet zur Durchführung eines Verfahrens nach einem der Ansprüche 1 bis 11.

23. Elektronisch steuerbares pneumatisches Bremssystem (204) nach Anspruch 22, **dadurch gekennzeichnet, dass** der Zusatz-Bremsdruckanschluss (41) des elektropneumatischen Feststellbremsmoduls (10, 10', 10") mit einem Vorderachsmodulator (720) oder einem Hinterachsmodulator (722) oder mit einem Anhänger-Steuerventil (724) zum Bereitstellen eines Zusatzsteuerdrucks (pZ) pneumatisch verbindbar ist.

24. Fahrzeug (200), insbesondere Nutzfahrzeug (202), mit einem elektropneumatischen Feststellbremsmodul nach Anspruch 12 bis 21, insbesondere mit einem elektronisch steuerbaren pneumatischen Bremssystem (204) nach Anspruch 22 oder 23.

## Claims

1. A method for operating an electro-pneumatic parking brake module (10, 10', 10") for an electronically controllable pneumatic brake system (204) for a vehicle (200), in particular a commercial vehicle (202), the module having
a supply port (20) for receiving a supply pressure (pV),
at least one parking brake port (21) for connecting at least one parking brake cylinder (24),
a main valve unit (50) which receives the supply pressure (pV) and which is configured to control a spring mechanism pressure (pF) at the parking brake port (21) as a function of a control pressure (pS),
a pilot valve assembly (70), which receives the supply pressure (pV), for providing the pilot pressure (pS), the pilot valve assembly (70) having a bistable valve (72) which is switchable between a first ventilation position (72A) and a second venting position (72B),
and a control unit (300) for providing first and second switching signals (S1, S2) to the pilot valve assembly (70),
the pilot valve assembly (70) having a monostable holding valve (76) which is pneumatically connected in series with the bistable valve (72) and is arranged in a control line (82) of the main valve unit (50), the holding valve (76) being opened in an open position (76B) in a currentless state, and
the control unit (300) being configured to hold the holding valve (76) for holding the control pressure (pS) in the holding position (76A) by means of the first switching signal (S1), and
an auxiliary adjusting port (60) being arranged in the control line (82) for receiving an auxiliary control pressure (pZ) which is provided at an auxiliary brake pressure port (41), the method having the step of:
- filling the parking brake cylinder (24) by pressurizing the control port (52.4) of the main valve assembly (50) to control the spring mechanism pressure (pF) at the parking brake port (21) as a function of the control pressure (pS),
- the control port (52.4) being pressurized by means of an auxiliary control pressure (pZ) which is provided at the auxiliary brake pressure port (41) and is accepted via the auxiliary adjusting port (60),
- the holding valve (76) automatically switching to an open position (76B) to vent the control port (52.4) in the event of a fault in an electronic component, in particular in a control unit (300) of the brake system (204), and/or in the event of a power failure, the control port (52.4) of the main valve assembly (50) being vented in order to vent the parking brake port (21),
**characterized in that**
- for holding the auxiliary control pressure (pZ) at the control port (52.4), the holding valve (76) is held in the holding position (76A).

2. The method according to claim 1, **characterized in that**
- for pressurizing the control port (52.4) with the auxiliary control pressure (pZ), the holding valve (76) is switched to the open position (76B).

3. The method according to claim 1 or 2, **characterized in that**
- for holding the auxiliary control pressure (pZ) at the control port (52.4) following the pressurization of the control port (52.4) with the auxiliary control pressure (pZ), the holding valve (76) is held in the holding position (76A).

4. The method according to one of the claims 1 to 3, **characterized in that**, for pressurizing the control port (52.4) with the auxiliary control pressure (pZ), the bistable valve (72) is switched to the venting position (72B) and/or remains in the venting position (72B).

5. The method according to one of the claims 1 to 4, **characterized in that** the control port (52.4) is further vented via the bistable valve (72), the bistable valve (72) constantly being in the venting position (72B) in an automatic operating mode (MA).

6. The method according to one of the claims 1 to 5, **characterized in that** the auxiliary control pressure (pZ) is provided by an additional brake component and/or by an axle modulator (720, 722, 724), in particular by a front axle modulator (720), by a rear axle modulator (722) or by a trailer control valve (724).

7. The method according to one of the claims 1 to 6, **characterized in that** the auxiliary control pressure (pZ) is formed by a front axle brake pressure (pBV) or a rear axle brake pressure (pBH) or a trailer brake pressure (pBA) or is derived from one of such brake pressures (pBV, pBH, pBA).

8. The method according to one of the claims 1 to 7, **characterized in that** the pressurization of the control port (52.4) by means of the auxiliary control pressure (pZ) is terminated when a target spring mechanism pressure (pFS) is reached for the spring mechanism pressure (pF) provided at the parking brake port (21).

9. The method according to one of the claims 1 to 8, **characterized in that** the control port (52.4) is pressurized by means of the auxiliary control pressure (pZ) during a pressurization period (TB), the pressurization period (TB) having a duration of between 0.5 and 1 second.

10. The method according to one of the claims 1 to 9, **characterized in that** the control port (52.4) is pressurized again by means of the auxiliary control pressure (pZ) if the spring mechanism pressure (pF) has dropped to a value below the target spring mechanism pressure (pFS).

11. The method according to one of the claims 1 to 10, **characterized in that**, prior to the pressurization of the control port (52.4) with the auxiliary control pressure (pZ), the holding valve (76) is switched to its holding position (76A).

12. An electro-pneumatic parking brake module (10, 10', 10") for an electronically controllable pneumatic brake system (204) for a vehicle (200), in particular a commercial vehicle (202), the module having
a supply port (20) for receiving a supply pressure (pV),
at least one parking brake port (21) for connecting at least one parking brake cylinder (24),
a main valve unit (50) which receives the supply pressure (pV) and which is configured to control a spring mechanism pressure (pF) at the parking brake port (21) as a function of a control pressure (pS),
a pilot valve assembly (70), which receives the supply pressure (pV), for providing the control pressure (pS), the pilot valve assembly (70) having a bistable valve (72) which is switchable between a first ventilation position (72A) and a second venting position (72B), and a control unit (300) for providing first and second switching signals (S1, S2) to the pilot valve assembly (70),
the pilot valve assembly (70) having a monostable holding valve (76) which is pneumatically connected in series with the bistable valve (72) and is arranged in a control line (82) of the main valve unit (50), the holding valve (76) being opened in an open position (76B) in a currentless state, and
the control unit (300) being configured to hold the holding valve (76) for holding the control pressure (pS) in the holding position (76A) by means of the first switching signal (S1), and
an auxiliary adjusting port (60) being arranged in the control line (82) for receiving an auxiliary control pressure (pZ) which is provided at an auxiliary brake pressure port (41),
- the holding valve (76) automatically switching to an open position (76B) to vent the control port (52.4) in the event of a fault in an electronic component, in particular in a control unit (300) of the brake system (204), and/or in the event of a power failure, the control port (52.4) of the main valve assembly (50) being vented in order to vent the parking brake port (21),
**characterized in that**
- for holding the auxiliary control pressure (pZ) at the control port (52.4), the holding valve (76) is held in the holding position (76A).

13. The electro-pneumatic parking brake module (10, 10', 10") according to claim 12, **characterized in that** the auxiliary adjusting port (60) is formed as a first selector valve port (54.1) of a selector valve unit (54) for receiving the auxiliary control pressure (pZ),
- the selector valve unit (54) at the first selector valve port (54.1) having a reverse locking characteristic (RC) such that the first selector valve port (54.1) opens in a flow direction (SR) from the auxiliary brake pressure port (41) via a third selector valve port (54.3) to the control port (52.4) and locks against the flow direction (SR).

14. The electro-pneumatic parking brake module (10, 10', 10") according to claim 13, **characterized in that** the selector valve unit (54) is arranged between the holding valve (76) and a control port (52.4) of the main valve unit (50).

15. The electro-pneumatic parking brake module (10, 10', 10") according to claim 13, **characterized in that** the selector valve unit (54) is arranged between the bistable valve (72) and the holding valve (76).

16. The electro-pneumatic parking brake module (10, 10', 10") according to claim 12, **characterized in that** the auxiliary adjusting port (60) is formed by a third bistable valve port (72.3) of the bistable valve (72), which is pneumatically connected to the holding valve (76) in the venting position (72B).

17. The electro-pneumatic parking brake module (10, 10', 10") according to one of the claims 12 to 16, **characterized in that** the selector valve unit (54) has a shuttle valve (56), which is configured to connect the first or a second selector valve port (54.1 , 54.2) to the third selector valve port (54.3), wherein, of the first and second selector valve ports (54.1, 54.2), the one to which the higher pressure is applied is opened.

18. The electro-pneumatic parking brake module (10, 10', 10") according to claim 17, **characterized in that** the shuttle valve (54) has a pretensioning spring (54.4) for the spring-loaded fixing of a valve position (54A, 54B), in particular for the spring-loaded fixing of the first valve position (54A) blocking the first selector valve port (54.1) leading to the auxiliary brake pressure port (41).

19. The electro-pneumatic parking brake module (10, 10', 10") according to one of the claims 12 to 18, **characterized in that** the auxiliary adjusting port (60) and/or the selector valve unit (54, 54') at the first selector valve port (54.1) has a check valve (55) blocking against the flow direction (SR).

20. The electro-pneumatic parking brake module (10, 10', 10") according to one of the claims 12 to 19, **characterized in that** the selector valve unit (54, 54') has a bypass line (57.1, 58.1), the bypass line (57.1, 58.1) pneumatically connecting the second and third selector valve ports (54.2, 54.3) and having a throttle (57.2) and/or a bypass check valve (58.2).

21. The electro-pneumatic parking brake module (10, 10', 10") according to one of the claims 12 to 20, **characterized in that** the auxiliary control pressure (pZ) is formed by a front axle brake pressure (pBV) or a rear axle brake pressure (pBH) or a trailer brake pressure (pBA) or is derived from one of such brake pressures (pBV, pBH, pBA).

22. An electronically controllable pneumatic brake system (204) having a central control unit (700), at least one axle modulator (720, 722, 724), a brake value transmitter (730) and at least one spring mechanism brake cylinder (24), the brake system comprising an electro-pneumatic parking brake module (10, 10', 10") according to one of the claims 12 to 20, which is configured to carry out a method according to one of the claims 1 to 11.

23. The electronically controllable pneumatic brake system (204) according to claim 22, **characterized in that** the auxiliary brake pressure port (41) of the electro-pneumatic parking brake module (10, 10', 10") is pneumatically connectable to a front axle modulator (720) or a rear axle modulator (722) or to a trailer control valve (724) for providing an auxiliary control pressure (pZ).

24. A vehicle (200), in particular commercial vehicle (202), having an electro-pneumatic parking brake module according to claim 12 to 21, in particular having an electronically controllable pneumatic brake system (204) according to claim 22 or 23.

## Revendications

1. Procédé pour faire fonctionner un module de freinage de stationnement électropneumatique (10, 10', 10") pour un système de freinage pneumatique (204) à commande électronique pour un véhicule (200), en particulier un véhicule utilitaire (202), comportant
un raccord de réserve (20) destiné à recevoir une pression de réserve (pV),
au moins un raccord de freinage de stationnement (21) pour le raccordement d'au moins un cylindre de freinage de stationnement (24),
une unité de valve principale (50) recevant la pression de réserve (pV), laquelle unité de valve principale est conçue pour appliquer une pression d'accumulateur à ressort (pF) au raccord de freinage de stationnement (21) en fonction d'une pression de commande (pS), et
un ensemble de valve de commande pilote (70) recevant la pression de réserve (pV) et destiné à fournir la pression de commande (pS), dans lequel l'ensemble de valve de commande pilote (70) présente une valve bistable (72) commutable entre une première position de ventilation (72A) et une seconde position de purge (72B),
et une unité de commande (300) destinée à fournir des premier et second signaux de commutation (S1, S2) à l'ensemble de valve de commande pilote (70), dans lequel
l'ensemble de valve de commande pilote (70) présente une valve de retenue (76) monostable connectée en série pneumatiquement avec la valve bistable (72) et disposée dans une conduite de commande (82) de l'unité de valve principale (50), dans lequel la valve de retenue (76) est ouverte hors tension dans une position d'ouverture (76B), et
l'unité de commande (300) est conçue pour retenir la valve de retenue (76), destinée à maintenir la pression de commande (pS), dans la position de retenue (76A) au moyen du premier signal de commutation (S1), et
un port de commande supplémentaire (60) est disposé dans la conduite de commande (82) et destiné à recevoir une pression de commande supplémentaire (pZ) fournie à un raccord de pression de freinage supplémentaire (41), comprenant l'étape de :
- remplissage du cylindre de freinage de stationnement (24) en sollicitant le raccord de commande (52.4) de l'ensemble de valve principale (50) pour l'application de la pression d'accumulateur à ressort (pF) au raccord de freinage de stationnement (21) en fonction de la pression de commande (pS), dans lequel
- la sollicitation du raccord de commande (52.4) se fait au moyen d'une pression de commande supplémentaire (pZ) fournie au raccord de pression de freinage supplémentaire (41) et reçue par le port de commande supplémentaire (60),
- en cas d'erreur dans un composant électronique, en particulier dans une unité de commande (300) du système de freinage (204) et/ou en cas de panne d'alimentation, la valve de retenue (76) passe automatiquement dans une position d'ouverture (76B) pour la purge du raccord de commande (52.4), dans lequel le raccord de commande (52.4) de l'ensemble de valve principale (50) destiné à la purge du raccord de freinage de stationnement (21) est purgé
**caractérisé en ce que,**
- pour maintenir la pression de commande supplémentaire (pZ) au niveau du raccord de commande (52.4), la valve de retenue (76) est maintenue dans la position de retenue (76A).

2. Procédé selon la revendication 1, **caractérisé en ce que,**
- pour soumettre le raccord de commande (52.4) à la pression de commande supplémentaire (pZ), la valve de retenue (76) est mise en position d'ouverture (76B).

3. Procédé selon la revendication 1 ou 2, **caractérisé en ce que,**
- pour maintenir la pression de commande (pZ) au niveau du raccord de commande (52.4), la valve de retenue (76) est maintenue dans la position de retenue (76A) après que le raccord de commande (52.4) a été soumis à la pression de commande supplémentaire (pZ).

4. Procédé selon l'une des revendications 1 à 3, **caractérisé en ce que,** pour soumettre le raccord de commande (52.4) à la pression de commande supplémentaire (pZ), la valve bistable (72) est mise en position de purge (72B) et/ou reste en position de purge (72B).

5. Procédé selon l'une des revendications 1 à 4, **caractérisé en ce que** la purge du raccord de commande (52.4) est ensuite effectuée par la valve bistable (72), dans lequel, dans un mode de fonctionnement automatique (MA), la valve bistable (72) se trouve en permanence dans la position de purge (72B).

6. Procédé selon l'une des revendications 1 à 5, **caractérisé en ce que** la pression de commande supplémentaire (pZ) est fournie par un composant de freinage supplémentaire et/ou un modulateur d'essieu (720, 722, 724), en particulier par un modulateur d'essieu avant (720), un modulateur d'essieu arrière (722) ou une valve de commande de remorque (724).

7. Procédé selon l'une des revendications 1 à 6, **caractérisé en ce que** la pression de commande supplémentaire (pZ) est formée par une pression de freinage d'essieu avant (pBV) ou une pression de freinage d'essieu arrière (pBH) ou une pression de freinage de remorque (pBA) ou est dérivée de l'une de ces pressions de freinage (pBV, pBH, pBA).

8. Procédé selon l'une des revendications 1 à 7, **caractérisé en ce que** la sollicitation du raccord de commande (52.4) au moyen de la pression de commande supplémentaire (pZ) se termine lorsque la pression d'accumulateur à ressort (pF) fournie au raccord de freinage de stationnement (21) atteint une pression d'accumulateur à ressort de consigne (pFS).

9. Procédé selon l'une des revendications 1 à 8, **caractérisé en ce que** la sollicitation du raccord de commande (52.4) au moyen de la pression de commande supplémentaire (pZ) se produit pendant une période de sollicitation (TB), dans lequel la période de sollicitation (TB) a une durée comprise entre 0,5 et 1 seconde.

10. Procédé selon l'une des revendications 1 à 9, **caractérisé en ce qu'une** nouvelle sollicitation du raccord de commande (52.4) au moyen de la pression de commande supplémentaire (pZ) se produit lorsque la pression d'accumulateur à ressort (pF) chute à une valeur inférieure à la pression d'accumulateur à ressort de consigne (pFS).

11. Procédé selon l'une des revendications 1 à 10, **caractérisé en ce que,** la valve de retenue (76) est mise dans sa position de retenue (76A) avant que le raccord de commande (52.4) ne soit soumis à la pression de commande supplémentaire (pZ).

12. Module de freinage de stationnement électropneumatique (10, 10', 10") pour un système de freinage pneumatique (204) à commande électronique pour un véhicule (200), en particulier un véhicule utilitaire (202), comportant
un raccord de réserve (20) destiné à recevoir une pression de réserve (pV),
au moins un raccord de freinage de stationnement (21) pour le raccordement d'au moins un cylindre de freinage de stationnement (24),
une unité de valve principale (50) recevant la pression de réserve (pV), laquelle unité de valve principale est conçue pour appliquer une pression d'accumulateur à ressort (pF) au raccord de freinage de stationnement (21) en fonction d'une pression de commande (pS), et
un ensemble de valve de commande pilote (70) recevant la pression de réserve (pV) et destiné à fournir la pression de commande (pS), dans lequel l'ensemble de valve de commande pilote (70) présente une valve bistable (72) commutable entre une première position de ventilation (72A) et une seconde position de purge (72B), et une unité de commande (300) destinée à fournir des premier et second signaux de commutation (S1, S2) à l'ensemble de valve de commande pilote (70), dans lequel
l'ensemble de valve de commande pilote (70) présente une valve de retenue (76) monostable connectée en série pneumatiquement avec la valve bistable (72) et disposée dans une conduite de commande (82) de l'unité de valve principale (50), dans lequel la valve de retenue (76) est ouverte hors tension dans une position d'ouverture (76B), et
l'unité de commande (300) est conçue pour retenir la valve de retenue (76), destinée à maintenir la pression de commande (pS), dans la position de retenue (76A) au moyen du premier signal de commutation (S1), et
un port de commande supplémentaire (60) est disposé dans la conduite de commande (82), lequel port de commande supplémentaire est destiné à recevoir une pression de commande supplémentaire (pZ) fournie à un raccord de pression de freinage supplémentaire (41),
- en cas d'erreur dans un composant électronique, en particulier dans une unité de commande (300) du système de freinage (204) et/ou en cas de panne d'alimentation, la valve de retenue (76) passe automatiquement dans une position d'ouverture (76B) pour la purge du raccord de commande (52.4), dans lequel le raccord de commande (52.4) de l'ensemble de valve principale (50) destiné à la purge du raccord de freinage de stationnement (21) est purgé,
**caractérisé en ce que**
- pour maintenir la pression de commande supplémentaire (pZ) au niveau du raccord de commande (52.4), la valve de retenue (76) est maintenue dans la position de retenue (76A).

13. Module de freinage de stationnement électropneumatique (10, 10', 10") selon la revendication 12, **caractérisé en ce que** le port de commande supplémentaire (60) est réalisé sous la forme d'un premier raccord de valve de sélection (54.1) d'une unité de valve de sélection (54), pour la réception de la pression de commande supplémentaire (pZ), dans lequel
- l'unité de valve de sélection (54) présente une caractéristique de verrouillage arrière (RC) au niveau du premier raccord de valve de sélection (54.1), de telle sorte que le premier raccord de valve de sélection (54.1) s'ouvre, dans un sens d'écoulement (SR), du raccord de pression de freinage supplémentaire (41) au raccord de commande (52.4) en passant par un troisième raccord de valve de sélection (54.3), et se verrouille à l'opposé du sens d'écoulement (SR).

14. Module de freinage de stationnement électropneumatique (10, 10', 10") selon la revendication 13, **caractérisé en ce que** l'unité de valve de sélection (54) est disposée entre la valve de retenue (76) et un raccord de commande (52.4) de l'unité de valve principale (50).

15. Module de freinage de stationnement électropneumatique (10, 10', 10") selon la revendication 13, **caractérisé en ce que** l'unité de valve de sélection (54) est disposée entre la valve bistable (72) et la valve de retenue (76).

16. Module de freinage de stationnement électropneumatique (10, 10', 10") selon la revendication 12, **caractérisé en ce que** le port de commande supplémentaire (60) est formé par un troisième raccord de valve bistable (72.3) de la valve bistable (72), lequel troisième raccord est relié pneumatiquement à la valve de retenue (76), dans la position de purge (72B).

17. Module de freinage de stationnement électropneumatique (10, 10', 10") selon l'une des revendications 12 à 16, **caractérisé en ce que** l'unité de valve de sélection (54) présente une valve d'inversion (56) conçue pour relier le premier ou un deuxième raccord de valve de sélection (54.1, 54.2) au troisième raccord de valve de sélection (54.3), dans lequel le raccord de valve de sélection ouvert parmi le premier et le deuxième raccord de valve de sélection (54.1, 54.2) est celui sur lequel une pression plus élevée est appliquée.

18. Module de freinage de stationnement électropneumatique (10, 10', 10") selon la revendication 17, **caractérisé en ce que** la valve d'inversion (54) présente un raccord de précontrainte (54.4) permettant de fixer, par la sollicitation par ressort, une position de valve (54A, 54B), permettant en particulier de fixer, par sollicitation par ressort, la première position de valve (54A) verrouillant le premier raccord de valve de sélection (54.1) menant au raccord de pression de freinage supplémentaire (41).

19. Module de freinage de stationnement électropneumatique (10, 10', 10") selon l'une des revendications 12 à 18, **caractérisé en ce que** le port de commande supplémentaire (60) et/ou l'unité de valve de sélection (54, 54') présente, au niveau du premier raccord de valve de sélection (54.1), une valve antiretour (55) à verrouillage opposé au sens d'écoulement (SR).

20. Module de freinage de stationnement électropneumatique (10, 10', 10") selon l'une des revendications 12 à 19, **caractérisé en ce que** l'unité de valve de sélection (54, 54') présente une conduite de dérivation (57.1, 58.1), dans lequel la conduite de dérivation (57.1, 58.1) relie pneumatiquement le deuxième et le troisième raccord de valve de sélection (54.2, 54.3) et présente un étrangleur (57.2) et/ou une valve antiretour de dérivation (58.2).

21. Module de freinage de stationnement électropneumatique (10, 10', 10") selon l'une des revendications 12 à 20, **caractérisé en ce que** la pression de commande supplémentaire (pZ) est formée par une pression de freinage d'essieu avant (pBV) ou une pression de freinage d'essieu arrière (pBH) ou une pression de freinage de remorque (pBA) ou est dérivée de l'une de ces pressions de freinage (pBV, pBH, pBA).

22. Système de freinage pneumatique (204) à commande électronique comportant une unité de commande centrale (700), au moins un modulateur d'essieu (720, 722, 724), un générateur de valeur de freinage (730) et au moins un cylindre de freinage (24) à accumulateur à ressort, présentant un module de freinage de stationnement électropneumatique (10, 10', 10") selon l'une des revendications 12 à 20, réalisé par la mise en oeuvre d'un procédé selon l'une des revendications 1 à 11.

23. Système de freinage pneumatique (204) à commande électronique selon la revendication 22, **caractérisé en ce que** le raccord de pression de freinage supplémentaire (41) du module de freinage de stationnement électropneumatique (10, 10', 10") peut être relié pneumatiquement à un modulateur d'essieu avant (720) ou un modulateur d'essieu arrière (722) ou à une valve de commande de remorque (724) pour fournir une pression de commande supplémentaire (pZ).

24. Véhicule (200), en particulier véhicule utilitaire (202), comportant un module de freinage de stationnement électropneumatique selon la revendication 12 à 21, comportant en particulier un système de freinage pneumatique (204) à commande électronique selon la revendication 22 ou 23.
